(19) Europäisches Patentamt
European Patent Office
Office européen des brevets

(11) **EP 3 147 323 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**28.12.2022   Patentblatt 2022/52**

(45) Hinweis auf die Patenterteilung:
**15.04.2020   Patentblatt 2020/16**

(21) Anmeldenummer: **15187177.9**

(22) Anmeldetag: **28.09.2015**

(51) Internationale Patentklassifikation (IPC):
***C08L 23/08*** (2006.01)

(52) Gemeinsame Patentklassifikation (CPC):
(C-Sets verfügbar)
**C08J 9/0061; C08J 9/0023; C08J 9/08;**
**C08L 23/08; C08L 23/0853; C09K 3/10;**
C08F 220/1804; C08J 2201/026; C08J 2203/02;
C08J 2207/00; C08J 2323/08; C08J 2353/02;
C08J 2401/00; C08J 2403/00; C08J 2405/00;

(Forts.)

(54) **THERMISCH EXPANDIERBARE ZUSAMMENSETZUNGEN MIT POLYSACCHARID**

THERMALLY EXPANDABLE COMPOSITIONS WITH POLYSACCHARIDE

COMPOSITIONS EXTENSIBLES THERMIQUEMENT COMPRENANT UN POLYSACCHARIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.03.2017   Patentblatt 2017/13**

(73) Patentinhaber: **Henkel AG & Co. KGaA**
**40589 Düsseldorf (DE)**

(72) Erfinder:
• **KOHLSTRUNG, Rainer**
**68723 Plankstadt (DE)**
• **RAPPMANN, Klaus**
**69469 Weinheim-Rittenweier (DE)**

(56) Entgegenhaltungen:
WO-A1-2015/140282        WO-A1-2015/140282
CN-A- 102 532 647        CN-A- 103 756 111
CN-A- 112 226 015        JP-A- 2000 143 862
US-A1- 2014 131 910

• M.A. RODRIGUEZ-PEREZ ET AL: "Foaming of EVA/starch blends: Characterization of the structure, physical properties, and biodegradability", POLYMER ENGINEERING AND SCIENCE., Bd. 52, Nr. 1, 15. Juli 2011 (2011-07-15), Seiten 62-70, XP055244916, US ISSN: 0032-3888, DOI: 10.1002/pen.22046

EP 3 147 323 B2

(52) Gemeinsame Patentklassifikation (CPC): (Forts.)
C08L 3/02; C08L 2203/14; C08L 2310/00;
C09K 2003/1059; C09K 2003/1068

C-Sets
**C08L 23/0853, C08L 23/0869, C08L 1/00;**
**C08L 23/0853, C08L 23/0869, C08L 3/02**

**Beschreibung**

Die vorliegende Anmeldung betrifft eine thermisch expandierbare Zusammensetzung, die mindestens ein peroxidisch vernetzendes Polymer, mindestens ein Peroxid und mindestens ein endothermes chemisches Treibmittel enthält, Formkörper, die diese Zusammensetzung enthalten, sowie ein Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung derartiger Formkörper.

Moderne Fahrzeuge und Fahrzeugteile weisen eine Vielzahl von Hohlräumen auf, die abgedichtet werden müssen, um den Eintritt von Feuchtigkeit und Verschmutzungen zu verhindern, da diese zur Korrosion an den entsprechenden Karosserieteilen von innen heraus führen kann. Dies trifft insbesondere auf moderne selbst tragende Karosseriekonstruktionen zu, bei denen eine schwere Rahmenkonstruktion durch leichtgewichtige, strukturfeste Rahmengerüste aus vorgefertigten Hohlraumprofilen ersetzt wird. Derartige Konstruktionen weisen systembedingt eine Reihe von Hohlräumen auf, die gegen das Eindringen von Feuchtigkeit und Verschmutzungen abgedichtet werden müssen. Derartige Abdichtungen dienen weiterhin dem Zweck, die Weiterleitung von Luftschall sowie Strukturschall in derartigen Hohlräumen zu vermeiden und somit unangenehme Fahrzeuglauf- und Windgeräusche zu mindern und somit den Fahrkomfort im Fahrzeug zu steigern.

Schottteile, die eine abdichtende und/oder akustische Wirkung in derartigen Hohlräumen bewirken, werden häufig als "Hohlraumabschottungen", "pillar filler", "baffles" oder "acoustic baffles" bezeichnet. Sie bestehen in der Regel entweder vollständig aus thermisch expandierbaren Formkörpern oder aus Formkörpern, die einen Träger und in ihrem Peripheriebereich expandierbare polymere Zusammensetzungen enthalten. Diese Schottteile werden im Rohbau durch Einhängen, Einclipsen, Verschrauben oder Anschweißen an den offenen Baustrukturen befestigt. Nach dem Schließen der Baustrukturen im Rohbau und den weiteren Vorbehandlungen der Karosserie wird dann die Prozesswärme der Öfen zur Aushärtung der kathodischen Tauchlackierung ausgenutzt, um die Expansion des expandierbaren Teils des Schottteils auszulösen um somit den Querschnitt des Hohlraums abzudichten.

In modernen Fahrzeugen werden ferner immer häufiger metallische und/oder kunststoffbasierte Leichtbauteile für eine konstant maßhaltige Serienfertigung mit vorgegebener Steifigkeit und Strukturfestigkeit benötigt. Insbesondere im Fahrzeugbau ist im Zuge der gewünschten Gewichtsersparnis Bedarf für metallische Leichtbauteile aus dünnwandigen Blechen, die trotzdem ausreichende Steifigkeit und Strukturfestigkeit besitzen. Auch hier kommen Formkörper aus thermisch expandierbaren Zusammensetzungen, die die nötigen Stützeigenschaften verleihen zum Einsatz.

Entsprechende thermisch expandierbare Zusammensetzung werden zum Beispiel in den Schriften WO 2008/034755, WO 2007/039309, WO 2013/017536 und der deutschen Anmeldung 10 2012 221 192.6 beschrieben. Diese thermisch expandierbaren Zusammensetzungen finden auch Einsatz im Automobilbereich.

In derartigen expandierbaren Zusammensetzungen, wie beispielsweise Kautschuk-Vulkanisaten (Schwefel, Peroxid oder Benzochinondioxim) zur Abdichtung und Verklebung, Ethylenvinylacetatbasierten Hohlraumabschottungen, Epoxid-basierten Stützschäumen und expandierbaren Versiegelungsmassen im Automobilbau, werden heutzutage exotherme Treibmittel, wie beispielsweise ADCA (Azodicarbonamid), OBSH (4,4'-Oxybis(benzolsulfonylhydrazid)), DNPT (Dinitrosopentamethylentetramin), PTSS (p-Toluolsemicarbazid), BSH (Benzol-4-sulfonohydrazid), TSH (Toluol-4-sulfonohydrazid), 5-PT (5-Phenyltetrazol) und ähnliche, verwendet.

Diese Treibmittel haben den Nachteil, dass sie eine respiratorische Sensitivierung auslösen können, aus toxikologischer Sicht generell bedenklich sind, oder explosiv sind. Darüber hinaus entstehen bei ihrem Zerfall Nebenprodukte wie Ammoniak, Formamid, Formaldehyd oder Nitrosamine, die gemäß der Global Automotive Declarable Substance List (GADSL), IFA-KMR-List 08/2012 oder dem BGIA-Bericht "Index of hazardous substances 2012" im Automobilbau verboten sind. Zusätzlich ist bei der Verwendung von exothermen Treibmitteln der VOC-Gehalt (Gehalt flüchtiger organischer Verbindungen) sehr hoch.

Ferner hängt aufgrund des exothermen Zerfalls und des engen Temperaturbereichs der Zerfallstemperatur der obigen Treibmittel die Schaumstruktur von der Härtungs-/Schäumtemperaturen ab, die üblicherweise im Bereich 140-220°C liegen, und kann je nach Temperaturbereich sehr stark variieren. Dadurch schwanken die Expansionsrate und die Schaumstruktur zwischen den minimalen und maximalen Prozesstemperaturen. Die Schaumstruktur beeinflusst wiederum die Absorption von Wasser bei unterschiedlichen Härtungstemperaturen, die gerade bei grobporigen Schäumen sehr hoch sein kann. Bei Temperaturen unterhalb von 140°C können die genannten Treibmittel nicht effektiv verwendet werden.

Hinsichtlich der Lagerstabilität ist es vor allem beim Einsatz im Automobilbereich sehr wichtig, dass die expandierbaren Zusammensetzungen längere Zeit gelagert oder über weite Strecken in verschiedene Regionen und verschiedene Klimazonen hinweg transportiert werden können, ohne dass die Expansionsfähigkeit der Zusammensetzungen nachlässt. Jedoch weisen bekannte expandierbare Zusammensetzungen sowohl mit exothermen Treibmitteln als auch endothermen Treibmitteln häufig eine nicht optimale Lagerstabilität auf, was vor allem bei einer Lagerung unter einer hohen Luftfeuchtigkeit zutrifft.

WO 2015/140282 bezieht sich auf eine Zusammensetzung und ein Verfahren zum Füllen von Hohlräumen und auf die Lagerstabilität solcher Zusammensetzungen und offenbart eine thermisch expandierbare Zusammensetzung, enthaltend mindestens ein endothermes chemisches Treibmittel.

Aufgabe der vorliegenden Erfindung war es daher, thermisch expandierbare Massen zur Verfügung zu stellen, die ohne die genannten exothermen Treibmittel auskommen können aber in gleicher Weise wie die bekannten Massen für die oben beschriebenen Verwendungen geeignet sind und vor allem eine gute Lagerstabilität aufweisen.

Diese Aufgabe wird überraschender Weise durch thermisch expandierbare Zusammensetzungen gelöst, die

a) mindestens ein peroxidisch vernetzendes Polymer,
b) mindestens ein Peroxid,
c) mindestens eine Stärke und
d) mindestens ein endothermes chemisches Treibmittel enthalten,

dadurch gekennzeichnet, dass die thermisch expandierbare Zubereitung weniger als 1 Gew.-% von exothermen Treibmitteln enthält.

Entsprechende Zusammensetzungen überwinden die bekannten Nachteile und erfüllen gleichzeitig die an derartige thermisch expandierbare Zusammensetzungen gestellten Anforderungen in einem hohen Maße, vor allem in Hinblick auf eine hervorragende Expansion und eine gute Lagerfähigkeit.

Ein erster Gegenstand der vorliegenden Erfindung sind daher thermisch expandierbare Zusammensetzungen, enthaltend

a) mindestens ein peroxidisch vernetzendes Polymer,
b) mindestens ein Peroxid,
c) mindestens ein Polysaccharid und
d) mindestens ein endothermes chemisches Treibmittel,

dadurch gekennzeichnet, dass die thermisch expandierbare Zubereitung weniger als 1 Gew.-% von exothermen Treibmitteln enthält.

Als einen erfindungswesentlichen Bestandteil enthalten die thermisch expandierbaren Zusammensetzungen mindestens ein Polysaccharid. Unter einem Polysaccharid sind vorzugsweise Moleküle zu verstehen, bei denen mindestens 10 Monosaccharidmoleküle über eine glycosidische Bindung verbunden sind. Bevorzugte Beispiele umfassen Cellulose, Stärke (Amylose und Amylopektin), Pektin, Chitin, Chitosan, Glycogen, Callose und deren Derivate. Besonders bevorzugt sind mindestens eine Cellulose und/oder mindestens eine Stärke, insbesondere eine Stärke in der thermisch expandierbaren Zusammensetzung enthalten.

Der Einsatz von Polysaccharid, insbesondere von Cellulose und/oder Stärke, vor allem Stärke, hat einen besonders vorteilhaften Effekt auf die Lagerstabilität, wobei aber das Polysaccharid gleichzeitig das Expansionsverhalten nicht negativ beeinflusst, sondern sogar eher verbessert. So konnten durch den Einsatz von Polysaccharid, insbesondere Stärke sowohl die Haftung als auch der Erhalt der Expansion nach Lagerung entscheidend verbessert werden. Insbesondere bei Lagerbedingungen mit einer relativen Feuchte von > 70 % tritt dieser vorteilhafte Effekt auf.

Bei den erfindungsgemäß bevorzugten Cellulosen können grundsätzlich Cellulosederivate in allen erhältlichen Modifizierungen, Molekulargewichten, Verzweigungsgraden und Substitutionsmustern eingesetzt werden. Bevorzugte Beispiele sind Methylcellulose, Hydroxyethylcellulose, Hydroxyethylmethylcellulose, Hydroxypropylcellulose, Hydroxypropylmethylcellulose, Hydroxypropylethylcellulose, Carboxymethylcellulose und Cetylhydroxyethylcellulose.

Besonders bevorzugt wird die Cellulose in Form von einem Cellulosepulver eingesetzt, wie Holzmehl. Besonders bevorzugt weisen die Cellulosepulver eine Korn-/Fasergrössenverteilung (Angaben jeweils in Gew.-%) auf von > 30 %, insbesondere > 60 %, bevorzugt > 90 % kleiner als 32 $\mu$m, und bevorzugt zusätzlich > 70 %, insbesondere > 90 %, bevorzugt > 100 % kleiner 100 $\mu$m (Siebrückstand auf Alpine-Luftstrahlsieb nach DIN EN ISO 8130-1) auf.

Die im Rahmen der Erfindung bevorzugten Stärken bestehen generell im Wesentlichen aus Amylose und Amylopektin in wechselnden Mengenverhältnissen. Bevorzugt haben die Stärken einen Gehalt an Amylopektin von > 50 Gew.-%, insbesondere > 80 Gew.-%, vorzugsweise > 95 Gew.-%, besonders bevorzugt > 99 Gew.-% bezogen auf das Gesamtgewicht der jeweiligen Stärke.

Die Stärken können native, anionisch und/oder kationisch modifiziert, verestert, verethert und/oder vernetzt sein. Bevorzugt werden native und/oder anionische Stärken. Besonders bevorzugt sind Stärken auf Basis von Kartoffelstärke, Maisstärke, Wachsmaisstärke, Reisstärke, Weizenstärke (allgemein Getreidestärken) oder Tapiokastärke (Maniok). Im Rahmen der Versuche wurden besonders gute Ergebnisse mit Stärken auf Basis von Kartoffelstärke erzielt, weshalb Stärken auf Basis von Kartoffelstärke, insbesondere native Kartoffelstärke und/oder chemisch modifizierte Kartoffelstäke, wie phosphatierte hydoxypropyl-modifizierte Kartoffelstärke, besonders bevorzugt sind.

Geeignete Stärken sind prinzipiell alle aus natürlichen Vorkommen generierbare Stärken. Geeignete Stärkebeispiele sind Stärke aus Kartoffeln, Tapioka, Maniok, Reis, Weizen oder Mais. Weitere Beispiele sind Stärken aus Maranta, Batata, Roggen, Gerste, Hirse, Hafer, Sorghum, Stärken aus Früchten wie Kastanien, Eicheln, Bohnen, Erbsen u.a. Hülsenfrüchten, Bananen, sowie Pflanzenmark zum Beispiel der Sagopalme.

Neben Stärken pflanzlichen Ursprungs können auch Stärken verwendet werden, die chemisch modifiziert sind, fermentativ gewonnen wurden, rekombinanten Ursprungs sind oder durch Biotransformation beziehungsweise Biokatalyse hergestellt wurden. Unter "chemisch modifizierten Stärken" versteht die Erfindung solche Stärken, bei denen auf chemischem Wege die Eigenschaften im Vergleich zu den natürlichen Eigenschaften verändert wurden. Dies wird im Wesentlichen durch polymeranaloge Umsetzungen erreicht, bei denen Stärke mit mono-, bi- oder polyfunktionellen Reagenzien beziehungsweise Oxidationsmitteln behandelt wird. Dabei werden vorzugsweise die Hydroxygruppen der Polyglucane der Stärke durch Veretherung, Veresterung oder selektive Oxidation umgewandelt oder die Modifizierung beruht auf einer radikalisch initiierten Pfropfcopolymerisation von copolymerisierbaren ungesättigten Monomeren auf das Stärkerückgrat.

Zu besonderen chemisch modifizierten Stärken gehören unter anderem Stärkeester, wie Xanthogenate, Acetate, Phosphate, Sulfate, Nitrate, Stärkeether, wie zum Beispiel nichtionische, anionische oder kationische Stärkeether, oxidierte Stärken, wie etwa Dialdehydstärke, Carboxystärke, Persulfat-abgebaute Stärken und ähnliche Substanzen.

Bevorzugte chemische Modifikationen umfassen die Phosphatierung, Hydroxypropylierung, Acetylierung und Ethylierung.

"Durch Biotransformation hergestellte Stärken" bedeutet im Rahmen der Erfindung, dass Stärken, Amylose, Amylopektin oder Polyglucane durch katalytische Reaktion von monomeren Grundbausteinen, im allgemeinen oligomeren Sacchariden, insbesondere Mono- und Disacchariden, hergestellt werden, indem ein Biokatalysator (auch: Enzym) unter speziellen Bedingungen verwendet wird. Beispiele für Stärken aus biokatalytischen Prozessen sind neben anderen Polyglucan und modifizierte Polyglucane, Polyfructan und modifizierte Polyfructane.

Prinzipiell kann für die Zwecke der chemischen Modifikation jede anionische oder kationische Gruppe, die sich zur Modifikation von Stärke eignet, eingesetzt werden.

Beispiele für anionische Gruppen sind Carboxylgruppen, Phosphatgruppen, Sulfatgruppen, Boratgruppen, Phosphonatgruppen und Sulfonatgruppen.

Davon sind besonders bevorzugt Phosphat-, Borat- und Sulfatgruppen, von den Sulfatgruppen insbesondere diejenigen aus der Umsetzung mit Schwefelsäure., besonders bevorzugt sind Phosphatgruppen.

Beispiele für kationische Gruppen sind tertiäre Aminogruppen, quartäre Ammoniumgruppen, tertiäre Phosphingruppen, quartäre Phosphoniumgruppen, Iminogrup- pen, Sulfidgruppen und Sulfoniumgruppen.

Davon sind besonders bevorzugt Amino- und Ammoniumgruppen.

Diese Gruppen können frei oder in Form ihrer Salze in dem Stärkemolekül vorliegen. Ein Stärkemolekül kann auch mit verschiedenen anionischen bzw. kationischen Gruppen substituiert sein, die zudem über verschiedene Substituenten - einführende Verbindungen und über unterschiedliche Reaktionen eingeführt sein können.

Verfahren und Verbindungen zur Einführung dieser Gruppen sind dem Fachmann geläufig und allgemein bekannt.

Im Fall von Phosphat, Sulfat oder Borat können die korrespondierenden Stärkederivate durch die Umsetzung der freien anorganischen Säuren, z. B. im Fall von Phosphat Phosphorsäure oder seinen Estern, erhalten werden.

Carboxylgruppen können z. B. über nucleophile Substitution oder einer zur Michael- Addition verwandten Variante eingeführt werden. Ein Beispiel für den ersten Reaktionstyp ist die Umsetzung von Stärke mit Chloressigsäure, ein Beispiel für den zweiten Reaktionstyp ist die Addition von Maleinsäureanhydrid an das Stärkerückgrat. Zu nennen sind u.a. auch die Umsetzung mit Hydroxycarbonsäure in einer Synthese analog zur Williamsonschen-Ethersynthese. Auf diese Weise können z. B. durch den Einsatz von Äpfelsäure, Zitronensäure oder Weinsäure mit einer Veretherungsreaktion gleichzeitig mehr als nur eine Carboxylgruppe an eine Hydroxylgruppe der Stärke angekoppelt werden.

Darüber hinaus können Verbindungen, die z. B. mindestens zwei Carboxylgruppen enthalten, wie Dicarbonsäuren etc., über Veresterung einer Carboxylgruppe mit einer Hydroxylgruppe an das Stärkerückgrat gekoppelt werden.

Kationische Stärkederivate können wie folgt erhalten werden: Für die Ankopplung von Aminofunktionen können u.a. alle Derivate verwendet werden, die chemisch derart aktiviert sind, dass sie durch das Stärkerückgrat z. B. durch eine nucleophile Substitution, durch eine Addition oder durch eine Kondensation zur Reaktion gebracht werden. Als Beispiel für den ersten Reaktionstyp sind z. B. Trimethylammoniumchlorid oder 2-Diethylaminoethylchlorid zu nennen. Die ionische Struktur wird dabei entweder durch die direkte Umsetzung mit dem korrespondieren Salz oder durch die nachträgliche Addition von Salzsäure erhalten. Als Additionsprodukte können dabei Reaktionen mit Epoxidgruppen in der Seitengruppe des Stickstoff enthaltenden Reagenz gesehen werden. Als Beispiel sei 2,3-(Epoxypropyl)diethylammoniumchlorid oder dessen Hydrochlorid oder 2,3-(Epoxypropyl)trimethyiammoniumchlorid genannt. Zur Ankopplung durch Kondensation kommt es, wenn bei der Reaktion zwischen Stärke und des die ionischen Gruppen einführenden Reagenzes zur Abspaltung von Kondensationsprodukten wie etwa Wasser oder Methanol und ähnlichem kommt.

Zusätzlich können in der Stärke neben den anionischen bzw. kationischen Gruppen noch andere funktionelle Gruppen als Substituenten vorliegen.

Beispiele hierfür sind nichtionische Substituenten, die z. B. Ether- oder Esterfunktionen ausbilden können.

Im Fall der Anbindung weiterer Substituenten an das Stärkerückgrat über Etherverknüpfungen kommen z. B. folgende Möglichkeiten in Frage: Alkyl, wie Methyl, Ethyl, Propyl, Butyl, Alkenyl, Hydroxyalkyl, z. B. Hydroxyethyl, Hydroxypropyl. Für die Ankopplung über Estergruppen steht die Umsetzung mit Essigsäureanhydrid an oberster Stelle durch die Stärkeacetatderivate entstehen. Weitere Substituenten können durch Reaktion mit Propionsäure, Buttersäure und den höheren Fettsäuren, insbesondere aus dem natürlichen Stoffwechsel, wie etwa Laurylsäure, Ölsäure, etc., eingebracht werden. Besonders bevorzugt ist eine Etherverknüpfung, insbesondere mit Hydroxyalkyl, bevorzugt Hydroxypropyl.

Besonders bevorzugt sind Polysaccharide, insbesondere Stärken und/oder Cellulosen, bevorzugt Stärken mit einer Gelierungstemperatur von mindestens 40°C, bevorzugt von mindestens 50°C. Insbesondere weisen die Stärken eine Gelierungstemperatur von 40 bis 200°C, bevorzugt 50 bis 150 °C auf. Entsprechende Stärken haben einen positiven Effekt auf die Lagerstabilität mit einer verbesserten Expansion.

Insbesondere die Verwendung von mehr als einem Polysaccharid, bevorzugt mehr als einer Stärke und/oder mehr als einer Cellulose, insbesondere mehr als einer Stärke ist vorteilhaft. Hierbei haben die Stärken bevorzugt verschiedene Gelierungstemperaturen, wobei das Polysacharid 1 bzw. die Stärke 1 im Bereich 50-100 °C eine Gelierungstemperatur aufweist und das zweite Polysacharid 2 bzw. die mindestens zweite, vorzugsweise modifizierte Stärke 2 eine Gelierungstemperatur im Bereich 80 - 150 °C aufweist.

Die Gelierung beschreibt das Quellen des Polysaccharids. Zur Bestimmung der Gelierungs-/Verkleisterungstemperatur, wird der Übergang des Polysaccharids bzw. der Stärke bei der Temperatur der Quellung zugrunde gelegt. Die Gelierungstemperatur kann mittels Dynamischer Differenzkalorimetrie DSC oder auch mittels Mikroskopie bei polarisiertem Licht und Beobachtung der beginnenden Quellung bestimmt werden, vorzugsweise mittels DSC.

In verschiedenen Ausführungsformen enthalten die thermisch expandierbaren Zusammensetzungen das mindestens eine Polysaccharid, bevorzugt die mindestens eine Stärke und/oder mindestens eine Cellulose, insbesondere die mindestens eine Stärke, in einer Menge von 0,1 bis 20 Gew.-%, insbesondere 0,5 bis 15 Gew.-%, bevorzugt 1 bis 10 Gew.-%, besonders bevorzugt 2 bis 5 Gew.-%, bezogen auf die Gesamtzusammensetzung. Dabei beziehen sich die Gew.-%, soweit nicht anders beschreiben, auf die Gesamtzusammensetzung vor der Expansion.

Dabei kann insbesondere auch auf kommerziell erhältliche Stärken und Stärkederivate zurückgegriffen werden: z. B. von Avebe, Cerestar, National Starch, Purac und Südstärke.

Neben dem Polysaccharid enthalten die Zusammensetzungen endotherme chemische Treibmittel. Endotherme chemische Treibmittel haben den Vorteil, dass sie weder gesundheitsschädlich noch explosiv sind und bei der Expansion geringere Mengen an flüchtigen organischen Verbindungen (VOC) entstehen. Die Zersetzungsprodukte sind im wesentlichen $CO_2$ und Wasser. Ferner haben die damit hergestellten Produkte eine gleichmäßigere Schaumstruktur über den gesamten Prozesstemperaturbereich, der für die Härtung genutzt wird. Dadurch ergibt sich im vorliegenden Fall in Kombination mit den anderen Komponenten der Zusammensetzung auch eine besonders geringere Wasserabsorption. Schließlich ist die Zersetzungstemperatur der endothermen Treibmittel, insbesondere von Mischungen davon, im Vergleich zu konventionellen exothermen Triebmitteln geringer und daher können Prozesstemperatur verringert und Energie gespart werden.

Unter einem endothermen chemischen Treibmittel werden erfindungsgemäß Verbindungen verstanden, die sich bei Einwirkung von Wärme zersetzen und dabei Gase freisetzen. Insbesondere sind die endothermen chemischen Treibmittel ausgewählt aus Bicarbonaten, Carbonsäuren, insbesondere festen, optional funktionalisierten, Polycarbonsäuren und deren Salzen und Mischungen daraus, insbesondere festen, optional funktionalisierten, Polycarbonsäuren, bevorzugt in Kombination mit Harnstoffderivaten.

Geeignete Bicarbonate (Hydrogencarbonate) sind solche der Formel $XHCO_3$, wobei X ein beliebiges Kation sein kann, insbesondere ein Alkalimetallion, vorzugsweise $Na^+$ oder $K^+$, wobei $Na^+$ äußerst bevorzugt ist. Weitere geeignete Kationen $X^+$ können ausgewählt sein aus $NH_4^+$, ½ $Zn^{2+}$, ½ $Mg^{2+}$, ½ $Ca^{2+}$ und deren Mischungen. Besonders bevorzugt werden Natrium- und/oder Kaliumhydrogencarbonat eingesetzt, insbesondere Natriumhydrogencarbonat.

Geeignete Carbonsäuren sind auch Monocarbonsäuren, wie Essigsäure und Propionsäure. Besonders bevorzugt sind allerdings feste Polycarbonsäuren. Geeignete Polycarbonsäuren schließen ein, ohne darauf beschränkt zu sein, feste, organische Di-, Tri- oder Tetrasäuren, insbesondere Hydroxy-funktionalisierte oder ungesättigte Di-, Tri-, Tetra- oder Polycarbonsäuren, wie beispielsweise Citronensäure, Weinsäure, Äpfelsäure, Fumarsäure und Maleinsäure. Besonders bevorzugt ist die Verwendung von Citronensäure. Citronensäure ist unter anderem deshalb vorteilhaft, da es ein ökologisch nachhaltiges Treibmittel darstellt.

Im Falle von Polycarbonsäuren können diese auch partiell verestert sein, wobei allerdings immer mindestens eine freie Säure-Gruppe pro Molekül enthalten bleibt. Bevorzugt sind die Polycarbonsäuren mit aliphatischen Alkoholen verestert, wie Methanol, Ethanol, Propanol und Butanol. Vorzugsweise sind die Polycarbonsäuren nicht verestert.

Ebenfalls geeignet sind die Salze der genannten Säuren sowie Mischungen von zwei oder mehr der beschriebenen Verbindungen. Bei Salzen der Polycarbonsäuren wird das Gegenion bevorzugt ausgewählt aus $Na^+$, $K^+$, $NH_4^+$, ½ $Zn^{2+}$, ½ $Mg^{2+}$, ½ $Ca^{2+}$ und deren Mischungen wobei $Na^+$ und $K^+$, insbesondere $Na^+$ bevorzugt ist.

Bei dem Einsatz von Carbonsäuren, insbesondere Polycarbonsäuren können vorzugsweise auch zusätzlich Carbonate eingesetzt werden. Bevorzugt ist dabei eine Mischung aus Hydrogencarbonaten und Carbonaten sowie Polycarbonsäuren, wodurch gezielt unterschiedliche Aktivierungsstufen und Zersetzungsreaktionen eingestellt werden können.

Besonders bevorzugte Treibmittel sind Natriumhydrogencarbonat und/oder Zitronensäure/Citrate, ganz besonders bevorzugt ist das Treibmittel eine Mischung von Natriumhydrogencarbonat und Zitronensäure. Eine derartige Mischung hat im Vergleich zu konventionellen exothermen Treibmitteln wie ADCA oder OBSH eine sehr niedrige Starttemperatur von nur 120-140°C, wohingegen OBSH eine Starttemperatur von 140-160°C und ADCA aktiviert mit Zinksalzen eine Starttemperatur von 160-170°C und nicht aktiviert von sogar 210-220°C hat.

Anstelle oder auch in Kombination mit Carbonaten können die Carbonsäuren, insbesondere Polycarbonsäuren auch vorzugsweise mit Harnstoffderivaten kombiniert werden. Durch die Verwendung der Harnstoffderivate lassen sich die Zersetzungstemperaturen der Carbonsäuren, insbesondere Polycarbonsäuren um bis zu 40°C absenken und dabei kann gleichzeitig die Zersetzungsgeschwindigkeit erhöht werden. So lassen sich geschäumte Zusammensetzungen erhalten, die sich durch eine feine, homogene Porenstruktur auszeichnen und gleichzeitig sehr geringe Wasserabsorption zeigen.

Bevorzugte Harnstoffderivate sind solche der Formel (I)

$$R_1\text{-NH-C(=X)-NR}_2R_3 \qquad \text{(I)},$$

wobei wobei X für O oder S steht, $R_1$, $R_2$ und $R_3$ unabhängig für H, substituiertes oder unsubstituiertes Alkyl, substituiertes oder unsubstituiertes Heteroalkyl, substituiertes oder unsubstituiertes Cycloalkyl, substituiertes oder unsubstituiertes Aryl oder -C(O)-$R_4$ stehen, wobei $R_4$ für H, substituiertes oder unsubstituiertes Alkyl steht.

"Substituiert", wie im Zusammenhang mit den Alkyl- oder Heteroalkylresten, für welche $R_1$, $R_2$, $R_3$ und $R_4$ stehen können, hierin verwendet, bedeutet, dass die entsprechende Gruppe mit einem oder mehreren Substituenten ausgewählt aus der Gruppe bestehend aus -OR', -COOR', -NR'R", -C(=X)NR'R", -NR"C(=X)NR'R", Halogen, unsubstituiertem $C_{6-14}$ Aryl, unsubstituiertem $C_{2-14}$ Heteroaryl enthaltend 1 bis 5 Heteroatome ausgewählt aus O, N und S, unsubstituiertem $C_{3-10}$ Cycloalkyl und unsubstituiertem $C_{2-10}$ Heteroalicyclyl enthaltend 1 bis 5 Heteroatome ausgewählt aus O, N und S substituiert ist.

"Substituiert", wie im Zusammenhang mit den Aryl- und Cycloalkylresten, für welche $R_1$, $R_2$ und $R_3$ stehen können, hierin verwendet, bedeutet, dass die entsprechende Gruppe mit einem oder mehreren Substituenten ausgewählt aus der Gruppe bestehend aus -OR', -COOR', -NR'R", -C(=X)NR'R", -NR"C(=X)NR'R", Halogen, unsubstituiertem $C_{1-10}$ Alkyl und -$CH_2$-Aryl substituiert sein kann, wobei die Arylgruppe in der -$CH_2$-Aryl-Gruppe wiederum mit -OR', -COOR', -NR'R", -C(=X)NR'R", -NR"C(=X)NR'R", Halogen und unsubstituiertem $C_{1-10}$ Alkyl substituiert sein kann.

R' und R" sind dabei unabhängig voneinander ausgewählt aus H, unsubstituiertem $C_{1-10}$ Alkyl, unsubstituiertem $C_{6-14}$ Aryl, unsubstituiertem $C_{2-14}$ Heteroaryl, unsubstituiertem $C_{3-10}$ Cycloalkyl, unsubstituiertem $C_{2-10}$ Heteroalicyclyl, Alkylaryl, Arylalkyl, Heteroarylalkyl und Alkylheteroaryl.

"Alkyl", wie hierin verwendet, bezieht sich auf lineare oder verzweigte Alkylgruppen, wie beispielsweise Methyl, Ethyl, n-Propyl, iso-Propyl, n-Butyl, n-Pentyl, n-Hexyl, n-Heptyl, n-Octyl, n-Nonyl, n-Decyl, n-Undecyl und n-Dodecyl sowie die linearen $C_{14}$, $C_{16}$ und $C_{18}$ Alkylreste. In verschiedenen Ausführungsformen sind die Alkylreste kurzkettige $C_{1-4}$ Alkylreste, insbesondere unsubstituierte, lineare $C_{1-4}$ Alkylreste. Die Alkylreste können substituiert oder unsubstituiert sein, sind aber vorzugsweise unsubstituiert. Wenn sie substituiert sind, werden die Substituenten insbesondere ausgewählt aus der oben beschriebenen Gruppe von Substituenten.

"Heteroalkyl", wie hierin verwendet, bezieht sich auf Alkylreste wie oben definiert, in denen mindestens ein Kohlenstoffatom durch ein Heteroatom ersetzt ist, insbesondere N oder O, besonders bevorzugt O.

"Aryl", wie hierin verwendet, bezieht sich auf aromatische Gruppen, die mindestens einen aromatischen Ring, aber auch mehrere kondensierte Ringe aufweisen können, wie beispielsweise Phenyl, Naphthyl, Anthracenyl und dergleichen. Die Arylreste können substituiert oder unsubstituiert sein. Wenn sie substituiert sind, werden die Substituenten ausgewählt aus der oben beschriebenen Gruppe.

"Heteroaryl", wie hierin verwendet, bezieht sich auf Arylreste wie oben definiert, in denen mindestens ein Kohlenstoffatom durch ein Heteroatom ersetzt ist, insbesondere N, S oder O, besonders bevorzugt O.

"Halogen", wie hierin verwendet, bezieht sich auf Fluor, Chlor, Brom und Iod.

"Cycloalkyl", wie hierin verwendet, bezieht sich auf nicht-aromatische, cyclische Kohlenwasserstoffe, insbesondere cyclische Alkyl- oder Alkenylreste wie oben definiert, z.B. Cyclopentyl-, Cyclohexyl- und Cyclohexenyl-Reste. Wenn sie substituiert sind, werden die Substituenten ausgewählt aus der oben beschriebenen Gruppe.

"Heteroalicyclyl", wie hierin verwendet, bezieht sich auf Cycloalkylreste wie oben definiert, in denen mindestens ein Kohlenstoffatom durch ein Heteroatom ersetzt ist, insbesondere N, S oder O, besonders bevorzugt O.

In verschiedenen Ausführungsformen der Erfindung steht X für O.

In verschiedenen Ausführungsformen der Erfindung werden $R_2$ und $R_3$ ausgewählt aus H und unsubstituierten Alkylresten, insbesondere $C_{1-4}$ Alkylresten, wie beispielsweise Methyl oder Ethyl. In verschiedenen Ausführungsformen

der Erfindung sind $R_2$ und $R_3$ nicht H, sondern insbesondere $C_{1-4}$ Alkylreste. In anderen Ausführungsformen ist einer von $R_2$ und $R_3$ H und der andere ist ein $C_{1-4}$ Alkylrest.

In verschiedenen Ausführungsformen der Erfindung wird $R_1$ ausgewählt aus H und unsubstituierten Alkylresten, insbesondere $C_{1-4}$ Alkyresten, wie beispielsweise Methyl oder Ethyl. In verschiedenen anderen Ausführungsformen wird $R_1$ ausgewählt aus substituierten oder unsubstituierten Arylresten, insbesondere substituierten oder unsubstituierten Phenylresten. Wenn substituiert, sind die Phenylreste vorzugsweise substituiert mit Halogen, -OR', insbesondere -OH oder -O-$(C_{1-4})$ Alkyl, unsubstituiertem $C_{1-10}$ Alkyl, oder $CH_2$-Aryl, insbesondere $CH_2$-Phenyl, wobei der Phenylrest substituiert sein kann und wenn er substituiert ist, vorzugsweise substituiert ist mit -NR''C(=X)NR'R''. In verschiedenen Ausführungsformen ist $R_1$ derart ausgewählt, dass sich ein Bisharnstoffderivat der Formel (II) ergibt

$$H_2C(Phenyl\text{-}NH\text{-}C(=X)\text{-}NR_2R_3)_2 \qquad (II)$$

Wobei X, $R_2$ und $R_3$ wie oben definiert sind. Vorzugsweise sind in solchen Verbindungen alle $R_2$ identisch und alle $R_3$ identisch.

Beispielhafte Verbindungen der Formel (I) die erfindungsgemäß eingesetzt werden können schließen ein, sind aber nicht beschränkt auf: Harnstoff (reiner Harnstoff ohne Substituenten), N,N-Dimethylharnstoff, N,N-Diethylharnstoff, N,N'-Dimethylharnstoff, N,N'-Diethylharnstoff, 4-Chlorophenyl-N,N-dimethylharnstoff, 4,4'-Methylen-bis-(phenyldimethylharnstoff), 1,1-Dimethyl-3-(4-chlorophenyl)harnstoff, 1,1-Dimethyl-3-(3,4-dichlorophenyl)harnstoff, Isophorone bis(dimethylharnstoff), 1,1-Dimethyl-3-phenylharnstoff, 1,1-Dimethyl-3-(4-ethoxyphenyl)harnstoff, 1,1'-(4-Phenylen)-bis-(3,3-dimethylharnstoff), 1,1-Dimethyl-3-(2-hydroxyphenyl)harnstoff und 1,1-Dimethyl-3-(3-chloro-4-methylphenyl)harnstoff. Besonders bevorzugt sind Harnstoff, N,N-Dimethylharnstoff, N,N-Diethylharnstoff, N,N'-Dimethylharnstoff und N,N'-Diethylharnstoff.

Besonders bevorzugte Treibmittel sind Mischungen von Carbonsäuren, insbesondere Polycarbonsäuren, bevorzugt Zitronensäure/Citrat, mit den vorstehend beschriebenen Harnstoffderivaten.

Die Treibmittel können ferner weitere Zusatzstoffe enthalten, wie insbesondere Calciumoxid, Zeolithe, Zinkoxid und/oder Magnesiumoxid. Auch wenn zusätzlich Carbonate eingesetzt werden können, sind die Treibmittel bzw. die Zusammensetzungen vorzugsweise im Wesentlichen frei von Hydrogencarbonaten und Carbonaten. Unter dem Begriff "im Wesentlichen frei von" wird erfindungsgemäß verstanden, wenn die Zusammensetzungen weniger als 1 Gew.-%, vorzugsweise weniger als 0,1 Gew.-%, ganz besonders bevorzugt weniger als 0,01 Gew.-% der jeweiligen Substanz, insbesondere nicht die jeweilige Substanz enthalten.

In verschiedenen Ausführungsformen enthalten die thermisch expandierbaren Zusammensetzungen das Treibmittel in einer Menge von 0,1 bis 40 Gew.-%, bevorzugt 1 bis 35 Gew.-%, bevorzugt 5 bis 35 Gew.-%, besonders bevorzugt 10 bis 30 Gew.-%, ganz besonders bevorzugt 15 bis 25 Gew.-% bezogen auf die Gesamtzusammensetzung. Dabei beziehen sich die Gew.-%, soweit nicht anders beschreiben, auf die Gesamtzusammensetzung vor der Expansion.

In einer bevorzugten Ausführungsform enthalten die Zusammensetzungen 1 bis 10 Gew.-%, bevorzugt 2 bis 8 Gew.-% eines Carbonates, insbesondere Natriumhydrogencarbonat und 5 bis 35 Gew.-%, bevorzugt 10 bis 25 Gew.-%, ganz bevorzugt 15 bis 22 Gew.-% einer Carbonsäure, insbesondere einer Polycarbonsäure, bevorzugt Zitronensäure. Dabei beziehen sich die Gew.-%, soweit nicht anders beschrieben, auf die Gesamtzusammensetzung vor der Expansion. Bevorzugt ist das Verhältnis von Carbonat, insbesondere Natriumhydrogencarbonat zur Carbonsäure, insbesondere Polycarbonsäure, insbesondere Zitronensäure von 1:1 bis 1:20, bevorzugt von 1:2 bis 1:10.

In einer besonders bevorzugten Ausführungsform enthalten die Zusammensetzungen 0,02 bis 6 Gew.-%, bevorzugt 0,02 bis 2 Gew.-%, noch bevorzugter 0,1 bis 1,5 Gew.-% des Harnstoffderivats der Formel (I) und 5 bis 35 Gew.-%, bevorzugt 10 bis 25 Gew.-%, ganz bevorzugt 15 bis 22 Gew.-% der Carbonsäure, insbesondere der Polycarbonsäure, bevorzugt Zitronensäure. Dabei beziehen sich die Gew.-%, soweit nicht anders beschrieben, auf die Gesamtzusammensetzung vor der Expansion. Bevorzugt ist das Gewichtsverhältnis von Harnstoffderivat zur Carbonsäure, insbesondere Polycarbonsäure von 0,1:1 bis 0,1:20, bevorzugt von 0,1:2 bis 0,1:10.

In einer besonders bevorzugten Ausführungsform wird das Treibmittel als "Masterbatch" in die thermisch expandierbare Zusammensetzung eingebracht. Unter dem Masterbatch versteht man eine Vormischung des zu verwendenden Treibmittels z.B. mit einem Polymer, vorzugsweise dem eingesetzten Polymer a). Neben den prozessualen Vorteilen hat diese Vorgehensweise den Vorteil, dass das Treibmittel besonders homogen und schonend verteilt werden kann und dabei weniger Hitze durch das Kneten/Mischen entsteht. Das Treibmittel kann so vor einer ungewollten Zersetzung geschützt werden. Besonders bevorzugt ist ein Masterbatch, welches das mindestens eine endotherme Treibmittel, bevorzugt das Harnstoffderivat und Zitronensäure, und mindestens einen Teil des peroxidisch vernetzbaren Polymers a) enthält. Zusätzlich kann der Masterbatch das mindestens eine Polysaccharid enthalten. Daneben kann der Masterbatch auch weitere Komponenten, insbesondere Füllstoffe, enthalten, wie weitere Polymere, Talkum, Farbstoffe und/oder Antioxidantien.

Die thermisch expandierbaren Zubereitungen enthalten weniger als 1 Gew.-% von exothermen Treibmitteln.

Neben dem endothermen Treibmittel enthält die thermisch expandierbare Zusammensetzung als Bindemittelsystem mindestens ein peroxidisch vernetzbares Polymer a).

Als peroxidisch vernetzbare Polymere kommen prinzipiell alle thermoplastischen Polymere und thermoplastischen Elastomere in Frage, die sich peroxidisch vernetzen lassen. Als "peroxidisch vernetzbar" bezeichnet der Fachmann derartige Polymere, bei denen durch Einwirkung eines radikalischen Starters ein Wasserstoffatom aus der Haupt- oder einer Nebenkette abstrahiert werden kann, so dass ein Radikal zurückbleibt, das in einem zweiten Reaktionsschritt andere Polymerketten angreift.

In einer bevorzugten Ausführungsform ist das mindestens eine peroxidisch vernetzbare Polymer a) ausgewählt aus Styrol-Butadien-Blockcopolymeren, Styrol-Isopren-Blockcopolymeren, Ethylen-Vinylacetat-Copolymeren, funktionalisierten Ethylen-Vinylacetat-Copolymeren, funktionalisierten Ethylen-Butylacrylat-Copolymeren, Ethylen-Propylen-Dien-Copolymere, Ethylen-Methylacrylat-Copolymeren, Ethylen-Ethylacrylat-Copolymeren, Ethylen-Butylacrylat-Copolymeren, Ethylen-(Meth)acrylsäure-Copolymeren, Ethylen-2-Ethylhexyacrylat-Colpolymeren, Ethylen-Acrylester-Copolymeren und Polyolefinen, wie beispielsweise Polyethylen oder Polypropylen.

Unter einem funktionalisierten Copolymeren wird dabei erfindungsgemäß ein Copolymer verstanden, das mit zusätzlichen Hydroxidgruppen, Amingruppen, Carboxygruppen, Anhydridgruppen und/oder Acrylatgruppen versehen ist.

Besonders vorteilhaft im Sinne der vorliegenden Erfindung sind Ethylen-Vinylacetat-Copolymere, funktionalisierte Ethylen-Vinylacetat-Copolymere, funktionalisierte Ethylen-Butylacrylat-Copolymere, Ethylen-Propylen-Dien-Copolymere, Styrol-Butadien-Blockcopolymere, Styrol-Isopren-Blockcopolymere, Ethylen-Methylacrylat-Copolymere, Ethylen-Ethylacrylat-Copolymere, Ethylen-Butylacrylat-Copolymere und Ethylen-(Meth)acrylsäure-Copolymere. Ganz besonders bevorzugt sind Ethylen-Vinylacetat-Copolymere und funktionalisierte Ethylen-Vinylacetat-Copolymere, insbesondere Ethylen-Vinylacetat-Copolymere, die keine weiteren Monomereinheiten einpolymerisiert enthalten (reine Ethylen-Vinylacetat-Copolymere).

Thermisch expandierbare Zubereitungen, die mindestens ein Ethylen-Vinylacetat-Copolymer mit einem Vinylacetatanteil von 5 bis 30 Gew.-%, insbesondere von 10 bis 25 Gew.-%, ganz besonders von 15 bis 20 Gew.-%, bezogen auf die Gesamtmasse der Copolymere, enthalten, sind erfindungsgemäß besonders bevorzugt.

Weiterhin hat es sich als vorteilhaft erwiesen, wenn die thermisch expandierbare Zubereitung ein peroxidisch vernetzbares Polymer a), insbesondere ein Ethylen-Vinylacetat-Copolymer, mit einem Schmelzindex von 0,3 bis 400 g/10min, insbesondere von 0,5 bis 45 g/10min, enthält. Peroxidisch vernetzbare Polymere a), insbesondere Ethylen-Vinylacetat-Copolymere, mit einem Schmelzindex von 1,5 bis 25 g/10min, insbesondere von 2 bis 10 g/10 min, ganz besonders von 2 bis 8 g/10min sind besonders vorteilhaft. Es kann erfindungsgemäß vorteilhaft sein, wenn zwei oder mehrere Polymere mit verschiedenen Schmelzindices in den thermisch expandierbaren Zubereitungen eingesetzt werden.

Der Schmelzindex wird hierfür in einem Kapillarrheometer bestimmt, wobei das Polymer bei 190°C in einem beheizbaren Zylinder aufgeschmolzen und unter einem durch die Auflagelast (2,16kg) entstehenden Druck durch eine definierte Düse (Kapillare) gedrückt wird (ASTM D1238). Ermittelt wird die austretende Masse als Funktion der Zeit.

In einer bevorzugten Ausführungsform, wie für Niedertemperatur-expandierende Formulierungen, weisen die Polymere a) einen Schmelzpunkt (bestimmbar mittels DSC nach ASTM D3417) unterhalb der Zersetzungstemperatur des endothermen Treibmittels auf. Bevorzugt weist das Polymer a) einen Schmelzpunkt unterhalb von 100 °C, bevorzugt zwischen 90 und 60 °C auf.

Die thermisch expandierbaren Zubereitungen enthalten vorzugsweise mindestens 30 Gew.-% insbesondere mindestens 50 Gew.-% und bevorzugt maximal 90 Gew.-%, insbesondere maximal 85 Gew.-% mindestens eines peroxidisch vernetzbaren Polymers a). Thermisch expandierbare Zubereitungen, die 30 bis 90 Gew.-%, insbesondere 40 bis 85 Gew.-%, bevorzugt 50 bis 80 Gew.-% mindestens eines peroxidisch vernetzbaren Polymers a), jeweils bezogen auf die Gesamtmasse der thermisch expandierbaren Zubereitung enthalten, sind besonders bevorzugt.

Die thermisch expandierbaren Zubereitungen enthalten vorzugsweise mindestens 30 Gew.-% und bevorzugt maximal 85 Gew.-%, insbesondere maximal 70 Gew.-% mindestens eines Ethylen-Vinylacetat-Copolymers. Thermisch expandierbare Zubereitungen, die 30 bis 85 Gew.-%, insbesondere 40 bis 75 Gew.-%, bevorzugt 50 bis 70 Gew.-% mindestens eines Ethylen-Vinylacetat-Copolymers, jeweils bezogen auf die Gesamtmasse der thermisch expandierbaren Zubereitung enthalten, sind besonders bevorzugt.

In verschiedenen Ausführungsformen wird als Polymer a) eine Mischung von mindestens zwei Polymeren eingesetzt, wobei das erste Polymer nicht Glycidyl(meth)acrylat als Monomer einpolymerisiert enthält und vorzugsweise aus den vorstehend beschriebenen ausgewählt wird, und das zweite Polymer Glycidyl(meth)acrylat als Monomer einpolymerisiert enthält. Der Ausdruck "(Meth)acrylat", wie hierin verwendet, umfasst jeweils die entsprechenden Acrylate und Methacrylate. In verschiedenen Ausführungsformen enthalten die thermisch expandierbaren Zusammensetzungen mindestens ein zweites peroxidisch vernetzbares Polymer, welches zu einem Anteil von 2 bis 25 Gew.-%, bezogen auf das jeweilige Polymer, Glycidyl(meth)acrylat als Monomer einpolymerisiert enthält. Der Glycidyl(meth)acrylat-Anteil an diesem Polymer beträgt bevorzugt 2 bis 20 Gew.-%, insbesondere 3 bis 15 Gew.-%, bevorzugt 6 bis 10 Gew.-%, bezogen auf die Gesamtmasse der Copolymere. Bevorzugt enthalten diese Polymere Glycidylmethacrylat. Als solche Polymere eignen sich die oben beschriebenen peroxidisch vernetzbaren Polymere, wobei die Polymere Glycidyl(meth)acrylat als Einheit enthalten. Besonders bevorzugt sind Terpolymere, die neben Glycidyl(meth)acrylat als Einheit bevorzugt Monomere ausgewählt aus der Gruppe von Ethylen, Propylen, Acrylsäureester, wie bevorzugt Methyl(meth)acrylat, Ethyl(meth)acrylat, Propyl(meth)acrylat oder Butyl(meth)acrylat, Styrol und Vinylacetat enthalten. Ganz besonders bevorzugt sind Ethylen/(Meth)Acrylsäureester/Glycidyl(meth)acrylat-Terpolymere, insbesondere Ethylen/Methyl(meth)acrylat/Glycidylmethacrylat und Ethylen/Butyl(meth)acrylat/Glycidyl-methacrylat. Weiterhin hat es sich als vorteilhaft erwiesen, wenn der Schmelzindex dieses Polymers, insbesondere des Terpolymers, von 0,3 bis 400 g/10min, insbesondere von 0,5 bis 45 g/10min ist. Polymere, insbesondere Terpolymere, mit einem Schmelzindex von 1,5 bis 25 g/10min, insbesondere von 2 bis 15 g/10 min, sind besonders vorteilhaft.

In einer bevorzugten Ausführungsform, wie für Niedertemperatur-expandierende Formulierungen, weisen diese Polymere, die Glycidyl(meth)acrylat-Monomere einpolymerisiert enthalten, einen Schmelzpunkt (bestimmbar mittels DSC nach ASTM D3417) unterhalb der Zersetzungstemperatur des endothermen Treibmittels auf. Bevorzugt weist das Polymer einen Schmelzpunkt unterhalb von 100 °C, bevorzugt zwischen 90 und 60 °C, bevorzugt zwischen 80 und 65 °C auf.

Es kann erfindungsgemäß vorteilhaft sein, wenn zwei oder mehrere, insbesondere zwei verschiedene Polymere, die Glycidyl(meth)acrylat-Monomere einpolymerisiert enthalten, in den thermisch expandierbaren Zubereitungen eingesetzt werden. Vor allem für die Verbesserung der geringen Wasserabsorption sind zwei verschiedene Terpolymere von Vorteil. Bevorzugt sind ein Ethylen/Methyl(meth)acrylat/Glycidylmethacrylat und ein Ethylen/Butyl(meth)acrylat/Glycidylmethacrylat enthalten.

Die thermisch expandierbaren Zubereitungen können in solchen Ausführungsformen vorzugsweise mindestens 2 Gew.-% und bevorzugt maximal 40 Gew.-%, insbesondere maximal 20 Gew.-% mindestens eines Polymers, welches zu einem Anteil von 2 bis 25 Gew.-%, insbesondere 3 bis 20 Gew.-%, bezogen auf das jeweilige Polymer, Glycidyl(meth)acrylat als Monomer einpolymerisiert enthält, insbesondere mindestens eines Terpolymers, enthalten. Thermisch expandierbare Zubereitungen, die 2 bis 40 Gew.-%, insbesondere 5 bis 30 Gew.-%, bevorzugt 7,5 bis 22,5 Gew.-% mindestens eines peroxidisch vernetzbaren Polymers, das Glycidyl(meth)acrylat als Monomer einpolymerisiert enthält, jeweils bezogen auf die Gesamtmasse der thermisch expandierbaren Zubereitung enthalten, sind besonders bevorzugt. Dabei können die Zubereitungen zusätzlich mindestens ein Ethylen-Vinylacetat-Copolymer in den oben angegeben Mengen enthalten.

Als weiterer Bestandteil neben den vorstehend beschriebenen peroxidisch vernetzbaren Polymeren können die thermisch expandierbaren Zubereitungen vorzugsweise mindestens ein niedermolekulares multifunktionelles Acrylat enthalten.

Unter einem "niedermolekularen multifunktionellen Acrylat" wird eine Verbindung verstanden, die mindestens zwei Acrylatgruppen aufweist und ein Molgewicht unterhalb von 2400g/mol, vorzugsweise unterhalb von 800g/mol, aufweist. Als vorteilhaft haben sich insbesondere derartige Verbindungen erwiesen, die zwei, drei oder mehr Acrylatgruppen pro Molekül aufweisen.

Bevorzugte difunktionelle Acrylate sind Ethylenglycol-Dimethacrylat, Diethylenglycol- Dimethacrylat, Triethlenglycol-Dimethacrylat, Triethlenglycol-Diacrylat, Tripropyleneglycol-Dimethacrylat, 1,4-Butandiol-Dimethacrylat, 1,3 Butylenglycol-Dimethacrylat, 1,3-Butandiol-Dimethacrylat, Tricyclodecandimethanol-Dimethacrylat, 1,10-Dodecandiol-Dimethacrylat, 1,6-Hexandiol-Dimethacrylat, 2-Methyl-1,8-octandiol-Dimethacrylat, 1,9-Nonandiol-Dimethacrylat, Neopentylglycol-Dimethacrylat und Polybutylenglycol-Dimethacrylat.

Bevorzugte niedermolekulare Acrylate mit drei oder mehr Acrylatgruppen sind Glycerintriacrylat, Di-pentaerythritol-Hexaacrylat, Pentaerythritol-Triacrylat (TMM), Tetramethylolmethan- Tetraacrylat (TMMT), Trimethylolpropan-Triacrylat (TMPTA), Pentaerythritol-Trimethacrylat, Di-(Trimethylolpropan)-Tetraacrylat (TMPA), Pentaerythritol-Tetraacrylat, Trimethylolpropan-Trimethacrylat (TMPTMA), Tri(2-acryloxyethyl)isocyanurat und Tri(2- methacryloxyethyl)trimellitat sowie deren ethoxylierten und propoxylierten Derivate mit einem Gehalt von maximal 35-EO-Einheiten und/oder maximal 20-PO-Einheiten.

Thermisch expandierbare Zubereitung die ein niedermolekulares multifunktionelles Acrylat ausgewählt aus Triethylenglykoldiacrylat, Triethlenglycol-Dimethacrylat, Trimethylolpropantriacrylat (TMPTA) und Trimethylolpropantrimethacrylat (TMPTMA), Pentaerythritol-Triacrylat (TMM), Tetramethylolmethan- Tetraacrylat (TMMT), Pentaerythritol-Trimethacrylat, Di-(Trimethylolpropan)-Tetraacrylat (TMPA) und Pentaerythritol-Tetraacrylat enthalten, sind erfindungsgemäß ganz besonders bevorzugt.

Neben den niedermolekularen Acrylaten können die thermisch expandierbaren Zubereitungen weitere Covernetzer, wie beispielsweise Allylverbindungen, wie Triallyl-cyanurat, Triallylisocyanurat, Triallyl-trimesat, Triallyl-trimellitat (TATM), Tetraallyl-pyromellitat, den Diallylester von 1,1,3-Trimethyl-5-carboxy-3-(4-carboxyphenyl)inden, Trimethylolpropan-trimellitat (TMPTM) oder Phenylen-dimaleimide enthalten.

Dabei hat es sich als besonders vorteilhaft erwiesen, wenn die thermisch expandierbaren Zubereitungen mindestens ein niedermolekulares multifunktionelles Acrylat ausgewählt aus Triethylenglykoldiacrylat, Trimethylolpropantriacrylat (TMPTA) und Trimethylolpropantrimethacrylat (TMPTMA) enthalten.

Die Co-Vernetzer, bevorzugt die niedermolekularen multifunktionellen Acrylate sind in den thermisch expandierbaren Zubereitungen vorzugsweise in einer Menge von 0,2 bis 2,5 Gew.-%, insbesondere von 0,4 bis 1,4 Gew.-%, jeweils bezogen auf die Gesamtmasse der thermisch expandierbaren Zubereitung enthalten.

Als Härtersystem für die peroxidisch vernetzbares Polymere enthalten die thermisch expandierbaren Zubereitungen mindestens ein Peroxid. Insbesondere sind die organischen Peroxide geeignet, wie beispielsweise Ketonperoxide, Diacylperoxide, Perester, Perketale und Hydroperoxide bevorzugt. Besonders bevorzugt sind beispielsweise Cumenhydroperoxid, t-Butylperoxid, Bis(tert-butylperoxy)-diisopropylbenzol, Di(tert-butylperoxyisopropyl)benzol, Dicumylperoxid, t-Butylperoxybenzoat, Di-alkylperoxydicarbonat, Diperoxyketale (z.B. 1,1-Di-tert-butylperoxy-3,3,5-trimethylcyclohexan), Ketonperoxide (z.B. Methylethylketon-Peroxide), 4,4- Ditert-butylperoxy-n-butyl-valerate und Trioxepane (z.B. 3,3,5,7,7-Pentamethyl-1,2,4-trioxepan).

Besonders bevorzugt sind die beispielsweise kommerziell von der Firma Akzo Nobel bzw. Pergan vertriebenen Peroxide, wie 3,3,5,7,7-Pentamethyl-1,2,4-trioxepan, 2,5-Dimethyl-2,5-di(tert.-butylperoxy)hexan, Di-tert.-butylperoxid, 2,5-Dimethyl-2,5-di(tert.-butylperoxy)hexan, tert.-Butylcumylperoxid, Di-(2-tert.-butylperoxyisopropyl)benzol, Dicumylperoxid, Butyl-4,4-di(tert.-butylperoxi)valerat, tert-Butylperoxy-2-ethylhexylcarbonat, 1,1-Di-(tert.-butylperoxy)-3,3,5-trimethylcyclohexan, tert.-Butylperoxybenzoat, Di-(4-methylbenzoyl)peroxid und Dibenzoylperoxid.

Es hat sich weiterhin als vorteilhaft erwiesen, wenn die eingesetzten Peroxide bei Raumtemperatur im Wesentlichen inert sind und erst bei Erhitzung auf höhere Temperaturen aktiviert werden (beispielsweise bei Erhitzung auf Temperaturen zwischen 130°C und 240°C). Besonders vorteilhaft ist es, wenn das eingesetzte Peroxid bei 65°C eine Halbwertszeit von mehr als 60 Minuten aufweist, dass heißt, dass nach einer Erhitzung der thermisch expandierbaren Zubereitung enthaltend das Peroxid auf 65°C für 60 Minuten sich weniger als die Hälfte des eingesetzten Peroxids zersetzt hat. Erfindungsgemäß können solche Peroxide besonders bevorzugt sein, die bei 115°C, insbesondere 130°C eine Halbwertszeit von mindestens 60 Minuten aufweisen.

Besonders bevorzugt ist mindestens ein Peroxid ausgewählt aus der Gruppe aus Di(tert.-butylperoxyisopropyl)benzol, Dicumylperoxid, 1,1-Di-(tert.-butylperoxy)-3,3,5-trimethylcyclohexan, 2,5-Dimethyl-2,5-di(tert.-butylperoxy)hexan, Dibenzoylperoxid und Di-tert.-butyl- 1,1,4,4-tetramethylbut-2-in-1,4-ylendiperoxid enthalten.

Ferner ist es erfindungsgemäß vorteilhaft, wenn mindestens ein oder die Peroxide in einer auf einen festen inerten Träger, wie beispielsweise Calciumcarbonat und/oder Silica und/oder Kaolin, aufgebrachten Form eingesetzt werden.

Das mindestens eine oder die Peroxide sind in den erfindungsgemäßen thermisch expandierbaren Zubereitungen vorzugsweise in einer Menge von 0,05 bis 4 Gew.-%, bevorzugt in einer Menge von 0,05 bis 2 Gew.-%, insbesondere in einer Menge von 0,1 bis 1 Gew.-%, jeweils bestimmt als Aktivsubstanzgehalt an Peroxid bezogen auf die Gesamtmasse der thermisch expandierbaren Zubereitung, enthalten.

Neben den oben genannten Bestandteilen können die thermisch expandierbaren Massen noch weitere übliche Komponenten, wie beispielsweise Füllstoffe, Weichmacher, Reaktivverdünner, Rheologie-Hilfsmittel, Netzmittel, Haftvermittler, Harze, Alterungsschutzmittel, Stabilisatoren und/oder Farbpigmente enthalten.

Beispiele für geeignete Weichmacher sind Alkylester zweibasiger Säuren (z. B. Phthalat-Ester, Adipinsäurepolyester), technische Weiß- und Prozessöle (Paraffine), Diarylether, Benzoate von Polyalkylenglykolen, Citronensäureester (z.B. Citronensäuretriethylester), organische Phosphate und Alkylsulfonsäureester von Phenol oder Kresol.

Als Füllstoffe kommen beispielsweise die diversen gemahlenen oder gefällten Kreiden, Calcium-Magnesiumcarbonate, Talkum, Graphit, Schwerspat, Kieselsäuren oder Silica sowie insbesondere silikatische Füllstoffe, wie beispielsweise Glimmer, etwa in Form von Chlorit, oder silikatische Füllstoffe vom Typ des Aluminium-Magnesium-Calcium-Silicats, z. B. Wollastonit, in Frage. Talkum ist ein besonders bevorzugter Füllstoff. Bevorzugt sind die Füllstoffe beschichtet, vorzugsweise mit Stearinsäure oder Stearaten. Dadurch wird das Rieselverhalten positiv beeinflusst.

Die Füllstoffe werden vorzugsweise in einer Menge von 0 bis 60 Gew.-%, insbesondere von 0 bis 15 Gew.-%, bevorzugt 2 bis 10 Gew.-%, besonders bevorzugt 3 bis 8 Gew.-% jeweils bezogen auf die Masse der gesamten thermisch expandierbaren Zusammensetzung eingesetzt.

Farbgebende Komponenten, insbesondere schwarze Farbstoffe auf Basis von Graphit und/oder Ruß, sind in den erfindungsgemäßen thermisch expandierbaren Zusammensetzungen vorzugsweise in einer Menge von 0 bis 2 Gew.-%, insbesondere von 0,1 bis 0,8 Gew.-%, ganz besonders bevorzugt 0,15 bis 0,5 Gew.-%, jeweils bezogen auf die Masse der gesamten thermisch expandierbaren Zusammensetzung enthalten.

Als Antioxidantien oder Stabilisatoren können beispielsweise sterisch gehinderte Phenole bzw. Mischungen davon und/oder sterisch gehinderte Thioether und/oder sterisch gehinderte aromatische Amine, Diphosphonite, Disulfide eingesetzt werden, wie beispielsweise Bis-(3,3-bis-(4'-hydroxy-3-tert. butylphenyl) butansäure)-glykolester oder auch 4-Methylphenol, Reaktionsprodukt mit Dicyclopentadien und Isobutylen .

Antioxidantien oder Stabilisatoren sind in den erfindungsgemäßen thermisch expandierbaren Zusammensetzungen vorzugsweise in einer Menge von 0 bis 5 Gew.-%, insbesondere von 0,1 bis 2 Gew.-%, bevorzugt von 0,1 bis 0,5 Gew.-%, jeweils bezogen auf die Masse der gesamten thermisch expandierbaren Zusammensetzung enthalten.

Trockenmittel wie Calciumoxid und/oder Zeolithe sind in den erfindungsgemäßen thermisch expandierbaren Zusammensetzungen vorzugsweise in einer Menge von 0 - 5 Gew.-%, insbesondere von 0,1 bis 2,5 Gew.-%, jeweils bezogen auf die Masse der gesamten thermisch expandierbaren Zusammensetzung enthalten.

Ein bevorzugter Gegenstand der vorliegenden Erfindung sind thermisch expandierbare

Zusammensetzungen, enthaltend

a) 30 bis 90 Gew.-% mindestens eines peroxidisch vernetzendes Polymers,
b) 0,05 bis 4 Gew.-% mindestens eines Peroxids
c) 0,5 bis 15 Gew.-% mindestens eines Polysaccharids, bevorzugt mindestens einer Stärke und/oder mindestens einer Cellulose, insbesondere mindestens einer Stärke und
d) 0,1 bis 40 Gew.-% mindestens eines endothermen chemischen Treibmittels,

wobei bevorzugt als das mindestens eine endotherme chemische Treibmittel mindestens eine Carbonsäure, insbesondere mindestens eine feste, optional funktionalisierte, Polycarbonsäure oder deren Salz, vorzugsweise zu 5 bis 35 Gew.-%, und zusätzlich mindestens ein Carbonat, vorzugsweise zu 1 bis 10 Gew.-%" und/oder mindestens ein Harnstoffderivat der Formel (I), vorzugsweise zu 0,02 bis 6 Gew.-%, enthalten ist, jeweils bezogen auf die Gesamtmasse der thermisch expandierbaren Zubereitung vor der Expansion.

Ein weiterer bevorzugter Gegenstand der vorliegenden Erfindung sind thermisch expandierbare Zusammensetzungen, enthaltend

a) 30 bis 90 Gew.-%, insbesondere 40 bis 85 Gew.-%, bevorzugt 50 bis 80 Gew.-% mindestens eines peroxidisch vernetzendes Polymers,
b) 0,05 bis 4 Gew.-%, bevorzugt 0,05 bis 2 Gew.-%, insbesondere 0,1 bis 1 Gew.-% mindestens eines Peroxids,
c) 0,5 bis 15 Gew.-%, bevorzugt 1 bis 10 Gew.-%, insbesondere 2 bis 5 Gew.-% mindestens eines Polysaccharids, bevorzugt mindestens einer Stärke und/oder mindestens einer Cellulose, insbesondere mindestens einer Stärke und
d) 0,1 bis 40 Gew.-%, bevorzugt 1 bis 35 Gew.-%, bevorzugt 5 bis 35 Gew.-%, besonders bevorzugt 10 bis 30 Gew.-%, ganz besonders bevorzugt 15 bis 25 Gew.-% mindestens eines endothermen chemischen Treibmittels,

wobei bevorzugt das mindestens eine endotherme chemische Treibmittel mindestens eine Carbonsäure, insbesondere mindestens eine feste, optional funktionalisierte, Polycarbonsäure oder deren Salz, vorzugsweise zu 5 bis 35 Gew.-%, bevorzugt 10 bis 25 Gew.-%, ganz bevorzugt 15 bis 22 Gew.-%, und mindestens ein Harnstoffderivat der Formel (I), vorzugsweise zu 0,02 bis 6 Gew.-%, bevorzugt 0,02 bis 2 Gew.-%, noch bevorzugter 0,1 bis 1,5 Gew.-%, enthält, jeweils bezogen auf die Gesamtmasse der thermisch expandierbaren Zubereitung vor der Expansion.

Ein weiterer bevorzugter Gegenstand der vorliegenden Erfindung sind thermisch expandierbare Zusammensetzungen, enthaltend

a) 30 bis 85 Gew.-%, insbesondere 40 bis 75 Gew.-%, bevorzugt 50 bis 70 Gew.-% mindestens eines mindestens eines Ethylen-Vinylacetat-Copolymers und 2 bis 40 Gew.-%, insbesondere 5 bis 30 Gew.-%, bevorzugt 7,5 bis 22,5 Gew.-% mindestens eines peroxidisch vernetzbaren Polymers, das Glycidyl(meth)acrylat als Monomer einpolymerisiert enthält,
b) 0,05 bis 4 Gew.-%, bevorzugt 0,05 bis 2 Gew.-%, insbesondere 0,1 bis 1 Gew.-% mindestens eines Peroxids ,
c) 0,5 bis 15 Gew.-%, bevorzugt 1 bis 10 Gew.-%, insbesondere 2 bis 5 Gew.-% mindestens eines Polysaccharids, bevorzugt mindestens einer Stärke und/oder mindestens einer Cellulose, insbesondere mindestens einer Stärke und
d) 0,1 bis 40 Gew.-%, bevorzugt 1 bis 35 Gew.-%, bevorzugt 5 bis 35 Gew.-%, besonders bevorzugt 10 bis 30 Gew.-%, ganz besonders bevorzugt 15 bis 25 Gew.-% mindestens eines endothermen chemischen Treibmittels,

wobei bevorzugt das mindestens eine endotherme chemische Treibmittel mindestens eine Carbonsäure, insbesondere mindestens eine feste, optional funktionalisierte, Polycarbonsäure oder deren Salz, vorzugsweise zu 5 bis 35 Gew.-%, bevorzugt 10 bis 25 Gew.-%, ganz bevorzugt 15 bis 22 Gew.-%, und mindestens ein Harnstoffderivat der Formel (I), vorzugsweise zu 0,02 bis 6 Gew.-%, bevorzugt 0,02 bis 2 Gew.-%, noch bevorzugter 0,1 bis 1,5 Gew.-%, enthält, jeweils bezogen auf die Gesamtmasse der thermisch expandierbaren Zubereitung vor der Expansion.

Die erfindungsgemäßen thermisch expandierbaren Zusammensetzungen sind vorzugsweise derart formuliert, dass sie bei 22°C fest sind. Eine thermisch expandierbare Zusammensetzung wird erfindungsgemäß als "fest" bezeichnet, wenn die Geometrie dieser Zusammensetzung sich bei der angegebenen Temperatur innerhalb von 1 Stunde, insbesondere innerhalb von 24 Stunden, nicht unter dem Einfluss der Schwerkraft verformt.

Die erfindungsgemäßen thermisch expandierbaren Zusammensetzungen können durch Mischung der ausgewählten Komponenten in einem beliebigen, geeigneten Mischer, wie beispielsweise einem Kneter, einem Doppel-Z-Kneter, einem Innenmischer, einem Doppelschneckenmischer, einem kontinuierlichen Mischer oder einem Extruder, insbesondere einem Doppelschneckenextruder, hergestellt werden.

Obwohl es vorteilhaft sein kann die Komponenten etwas zu erhitzen, um die Erreichung einer homogenen, einheitlichen Masse zu erleichtern, muss dafür Sorge getragen werden, dass keine Temperaturen erreicht werden, die eine Aktivierung der Härter, der Beschleuniger und/oder des Treibmittels bewirken. Die resultierende thermisch expandierbare Zusammensetzung kann unmittelbar nach ihrer Herstellung in Form gebracht werden, beispielsweise durch Blasformen, Pelletierung, Spritzgussverfahren, Formpressverfahren, Stanzverfahren oder Extrusion.

Die Expansion der thermisch expandierbaren Zusammensetzung erfolgt durch Erhitzung, wobei die Zusammensetzung für eine bestimmte Zeit auf eine bestimmte Temperatur erhitzt wird, die ausreichend ist, um die Aktivierung des Treibmittels zu bewirken. In Abhängigkeit von den Bestandteilen der Zusammensetzung und den Bedingungen der Fertigungslinie liegen derartige Temperaturen üblicherweise im Bereich von 110°C bis 240°C, vorzugsweise 120°C bis 210°C, mit einer Verweilzeit von 10 bis 90 Minuten, vorzugsweise von 5 bis 60 Minuten.

Im Bereich des Fahrzeugbaus ist es besonders vorteilhaft, wenn die Expansion der erfindungsgemäßen Zusammensetzungen während der Passage des Fahrzeugs durch den Ofen zur Aushärtung der kathodischen Tauchlackierung erfolgt, so dass auf einen separaten Erhitzungsschritt verzichtet werden kann.

Die thermisch expandierbaren Zusammensetzungen der vorliegenden Erfindung können in einem weiten Bereich von Stütz-, Füll-, Dichtungs- und Klebstoffapplikationen zum Einsatz kommen, beispielsweise im Bereich der Schottteile zur Abdichtung von Hohlräumen in Fahrzeugen. Aber auch ein Einsatz als Unterfütterungsklebstoff, beispielsweise im Tür oder Dachbereich ist denkbar. Für einen derartigen Einsatzzweck können die erfindungsgemäßen thermisch expandierbaren Zusammensetzungen mittels Direktextrusion appliziert werden. Die Zusammensetzungen können aber auch in extrudierter Form an den Anwendungsort gebracht werden und dort aufgepresst und/oder angeschmolzen werden. Als dritte Alternative ist auch das Aufbringen als Co-Extrudat denkbar. Bei dieser Ausführungsform wird erfindungsgemäß unter das eigentliche nicht klebrige Formteil aus der erfindungsgemäßen thermisch expandierbaren Zusammensetzung eine zweite klebrige Zusammensetzung in einer dünnen Schicht aufgebracht. Diese zweite klebrige Schicht dient im Rahmen dieser Ausführungsform dazu, das Formteil im Rohbau zu fixieren.

Die thermisch expandierbaren Zusammensetzungen sind dementsprechend besonders für die Herstellung von Formkörpern, insbesondere Schotteilen zur Hohlraumabdichtung geeignet, d.h. zur Herstellung von Teilen, die in die Hohlräume von Fahrzeugen eingesetzt werden, anschließend durch Erhitzung expandieren und gleichzeitig aushärten und auf diese Weise den Hohlraum möglichst vollständig abdichten.

Ein zweiter Gegenstand der vorliegenden Erfindung ist dementsprechend ein Formkörper, der eine erfindungsgemäße thermisch expandierbare Zusammensetzung aufweist. Dabei kann es sich beispielsweise um ein Schottteil zum Abdichten von Hohlräumen eines Bauteils, das eine Form aufweist, die an den Hohlraum angepasst ist, handeln.

Unter einer "Form, die an den Hohlraum angepasst ist" werden dabei erfindungsgemäß alle Geometrien von Schottteilen verstanden, die nach der Expansion eine vollständige Abdichtung des Hohlraums sicherstellen. Dabei kann die Form des Schottteils individuell der Form des Hohlraums nachempfunden sein und entsprechende Spitzen und/oder Rundungen aufweisen; im Falle der erfindungsgemäßen thermisch expandierbaren Zusammensetzungen mit hohen Expansionsgraden, kann aber auch das Einbringen einer entsprechend großen Menge in variabler Form, beispielsweise in Form einer Raupe oder eines abgelängten Strangs / Extrudats des Materials, in den Hohlraum ausreichen, um nach der Expansion eine vollständige Abdichtung des Hohlraums zu gewährleisten.

Derartige Schottteile werden aus den erfindungsgemäßen thermisch expandierbaren Zusammensetzungen üblicherweise durch Spritzgusstechniken hergestellt. Dabei werden die thermisch expandierbaren Zusammensetzungen auf Temperaturen im Bereich von 70 bis 120°C erhitzt und dann in eine entsprechend ausgebildete Form injiziert.

Die erfindungsgemäßen Formkörper können in allen Produkten zum Einsatz kommen, die Hohlräume aufweisen. Dies sind neben den Fahrzeugen beispielsweise auch Flugzeuge, Schienenfahrzeuge, Haushaltsgeräte, Möbel, Gebäude, Wände, Abtrennungen oder auch Boote.

Ein weiterer Gegenstand der vorliegenden Erfindung ist ein Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung der hierin beschriebenen Zusammensetzungen und Formkörper. Vorzugsweise ist das Verfahren ein Verfahren zur Abdichtung von Hohlräumen eines Bauteils, wobei ein erfindungsgemäßes Schottteil in den Hohlraum eingebracht wird und anschließend auf eine Temperatur oberhalb von 110°C erhitzt wird, so dass die thermisch expandierbare Zusammensetzung expandiert und den Hohlraum abdichtet.

Ein weiterer Gegenstand der vorliegenden Erfindung ist die Verwendung eines erfindungsgemäßen Formkörpers oder Schotteils zur akustischen Abdichtung von Hohlräumen in Bauteilen und/oder zur Abdichtung von Hohlräumen in Bauteilen gegen Wasser und/oder Feuchtigkeit.

Noch ein weiterer Gegenstand der vorliegenden Erfindung ist die Verwendung eines erfindungsgemäßen Formkörpers zum Verstärken oder Versteifen von Bauteilen, insbesondere hohlen Bauteilen.

Die nachfolgenden Beispiele sollen die Erfindung näher erläutern, wobei die Auswahl der Beispiele keine Beschränkung des Umfanges des Erfindungsgegenstandes darstellen soll. Bei den Zusammensetzungen sind alle Mengenangaben Gewichtsteile, wenn nicht anders angegeben.

Ausführunqsbeispiele

Allgemeine Versuchsdurchführunq / Herstellung der Formulierungen:

Zur Herstellung der erfindungsgemäßen thermisch expandierbaren Zubereitungen wurden die enthaltenen Polymere bei RT im Kneter bzw. wenn notwendig unter Erwärmung auf bis zu 150 °C mit Füllstoffen zu einem homogenen Teig verarbeitet. Nacheinander wurden dann die weiteren nicht reaktiven Komponenten wie Füllstoffe, Russ, Stabilisatoren und Weichmacher, falls vorhanden, zugegeben und weitergeknetet bis die Formulierung glatt ist.

Bei unter 70 °C wurden dann alle reaktiven Komponenten wie z.B. Beschleuniger, Peroxide, Aktivatoren und Katalysatoren, und Treibmittel zugegeben und langsam untergeknetet bis der Klebstoff homogen gemischt ist. Dabei wurden die Treibmittel teilweise als Masterbatch eingesetzt.

Bestimmung der Expansion

Zur Bestimmung der Expansion wurden aus den gefertigten Platten der Beispielformulierungen Prüfkörper mit den Dimensionen ca. 20mm x 20mm x 3mm geschnitten, diese in einen Umluftofen eingeführt, dieser auf die in den Tabellen genannten Temperaturen erhitzt (Aufheizzeit ca. 7 bis 10 min) und die Prüfkörper dann für den in den Tabellen genannten Zeitraum bei dieser Temperatur belassen (Aufheizzeit inklusive). Die Expansion bei 175°C entspricht dabei den idealen Bedingungen, die im Rahmen der Aushärtung im Fahrzeugbau erzielt werden. Die Expansion bei 160°C simuliert die Unterbrandbedingungen, die Expansion bei 200°C die Überbrandbedingungen.

Das Ausmaß der Expansion [%] wurde mittels der Wasserverdrängungsmethode nach der Formel

$$Expansion = \frac{(m2 - m1)}{m1} \times 100$$

m1 = Masse des Prüfkörpers im Originalzustand in deionisiertem Wasser
m2 = Masse des Prüfkörpers nach Einbrand in deionisiertem Wasser ermittelt.

Bestimmung der Haftung:

Zur Bestimmung der Haftung wurden Prüfkörper (hergestellt wie bei der Expansion) auf feuerverzinktem Blech für 20 Minuten bei 160°C im Umluftofen erhitzt. Zur Prüfung der Haftung des geschäumten Formkörpers wird dieser nach Entnahme aus dem Umluftofen für 24 h bei RT gelagert. Anschließend wird der geschäumte Formkörper mechanisch durch Abreißen von der Metalloberfläche entfernt. Es wird der verbleibende Rückstand des Formkörpers auf der Metalloberfläche beurteilt und in Form der benetzten Oberfläche quantifiziert (%cf).

Die Schaumstruktur wurde jeweils optisch beurteilt.

Zur Bestimmung der Lagerfähigkeit wurden die obigen Tests nochmals nach Lagerung für 28 Tage bei 40°C mit 80% relative Luftfeuchtigkeit durchgeführt.

Zur Veranschaulichung des Vergleichs der Werte bevor und nach Lagerung werden in der folgenden Tabelle zusätzlich die absolute Differenz (Ads.Δ) und der relative Erhalt der Expansion in % für die genannten Bedingungen angegeben.

**Beispielformulierung (EVA basiert, Peroxid-vernetzend)**

| Stoffbezeichnung/-gruppe (generische Namen) | Vergleichsrezeptur 1 | Rezeptur 1 | Rezeptur 2 | Rezeptur 3 | Rezeptur 4 | Rezeptur 5 | Rezeptur 6 | Rezeptur 7 |
|---|---|---|---|---|---|---|---|---|
| EVA-Polymer 1 | 60,65 | 68,1 | 68,5 | 69,6 | 64,76 | 69,6 | 61,1 | 70,3 |
| Terpolymer 1 | 10,00 | 10,8 | 10,5 | 10,8 | 10,33 | 10,8 | 16,8 | 10,0 |
| Terpolymer 2 | 2,00 | 3 | 2,5 | 3 | 2,06 | 3 | 3 | 2,0 |
| Zitronensäure | 17,50 | 13 | 13 | 11,5 | 13,3 | 11,5 | 14 | 13,0 |
| NaHCO$_3$ | 3,50 | - | - | - | 2,6 | - | - | - |
| Talkum | 5,25 | - | - | - | 2,35 | - | - | - |
| Peroxid 1 | 0,20 | - | 0,5 | - | 0,2 | - | - | 0,2 |
| Peroxid 2 | 0,60 | - | 0,6 | 1,2 | 0,6 | - | 1,2 | 0,6 |
| Peroxid 3 | - | 1,2 | - | - | - | 1,2 | - | |
| Antioxidans | 0,30 | 0,3 | 0,3 | 0,3 | 0,3 | 0,3 | 0,3 | 0,3 |
| Harnstoff | - | 0,6 | 0,6 | 0,6 | - | 0,6 | 0,6 | 0,6 |
| Stärke 1 | - | **3** | 3 | - | 3 | - | 1,5 | |
| Stärke 2 | - | - | - | - | - | 3 | 1,5 | |
| Stärke 3 | - | - | - | 3 | - | - | - | |
| Cellulose | - | - | - | - | - | - | - | 3,0 |
| Russ | - | - | 0,5 | - | 0,5 | - | - | |
| **SUMME** | **100** | **100** | **100** | **100** | **100** | **100** | **100** | **100** |
| | | | | | | | | |
| Expansion | | | | | | | | |
| 20min, 160 °C | 527 | 551 | 517 | 490 | 462 | 484 | 530 | 561 |
| 25min, 175°C | 667 | 652 | 624 | 552 | 543 | 562 | 662 | 649 |
| 40min, 200°C | 990 | 770 | 752 | 655 | 715 | 647 | 772 | 733 |
| Haftung | 100 % cf | 100 % cf | 100 % cf | 100 % cf | 100 % cf | 100 % cf | 100 % cf | 100 % cf |
| Schaumstruktur | feinporig | feinporig | feinporig | feinporig | feinporig | feinporig | feinporig | feinporig |

EP 3 147 323 B2

(fortgesetzt)

| Stoffbezeichnung/-gruppe (generische Namen) | Vergleichsrezeptur 1 | Rezeptur 1 | Rezeptur 2 | Rezeptur 3 | Rezeptur 4 | Rezeptur 5 | Rezeptur 6 | Rezeptur 7 |
|---|---|---|---|---|---|---|---|---|
| Nach Lagerung (28d @ 40°C,80%r. F.): | | | | | | | | |
| Expansion | | | | | | | | |
| 20min, 160 °C | 301 | 443 | 437 | 420 | 411 | 376 | 391 | 451 |
| 25min, 175°C | 384 | 608 | 560 | 482 | 464 | 432 | 486 | 472 |
| 40min, 200°C | 412 | 536 | 583 | 503 | 551 | 474 | 537 | 497 |
| Haftung | 80 % cf | 100 % cf | 100 % cf | 100 % cf | 100 % cf | 100 % cf | 100 % cf | 100 % cf |
| Schaumstruktur | grobporig | feinporig | feinporig | feinporig | feinporig | feinporig | feinporig | feinporig |
| | | | | | | | | |
| Ads.A 20min, 160 °C | 226 | 108 | 80 | 70 | 51 | 108 | 139 | 110 |
| Ads.△ 40min, 200 °C | 578 | 234 | 169 | 152 | 164 | 173 | 235 | 236 |
| | | | | | | | | |
| Relaltiver Erhalt 20min, 160 °C | 57 | 80 | 85 | 86 | 89 | 78 | 74 | 80 |
| Relaltiver Erhalt 40min, 200 °C | 42 | 70 | 78 | 77 | 77 | 73 | 70 | 68 |

Eingesetzte Komponenten:

| | |
|---|---|
| EVA Polymer 1 | EVA, 16,5-19,5 %VA-Gehalt, Schmelzpunkt 82-90 °C, MFI 1,5-6 g/10min (190 °C, 2.16 kg)) |
| Terpolymer 1 | Terpolymer (GMA/EBA), reaktives Ethylen Terpolymer, 9 Gew.% Glycidylmethacrylat, 20 Gew.% Butylacrylat, Schmelzpunkt 72 °C, MFI 8 g/10min (190 °C, 2.16 kg)) |
| Terpolymer 2 | Ethylen-Acrylsäureester-Glycidylmethacrylat Terpolymer, Methylacrylatgehalt 24 Gew.%, Glycidylmethacrylatgehalt 8 Gew.%, Schmelzpunkt 65 °C, MFI 6 g/10min (190 °C, 2.16 kg) |
| Zitronensäure | Partikelgröße 10-15 $\mu$m |
| $NaHCO_3$ | Partikelgröße 10-15 $\mu$m, |
| Talkum | Talkum |
| Peroxid 1 | Di-(2-tert.-butyl-peroxyisopropyl)-benzol, 95% Peroxid, 8.98% Aktivsauerstoffgehalt, Halbwertszeittemperatur 1h = 146 °C, t90 = 175 °C (Rheometer t90 ungefähr 12 min) |
| Peroxid 2 | 2,5-Dimethyl-2,5-di-(tert.-butylperoxy)-hexan, 45% Peroxid, Pulver mit Kreide, 4.96% Aktivsauerstoffgehalt, Halbwertszeittemperatur 1h = 147 °C, t90 = 175 °C (Rheometer t90 ungefähr 12 min) |
| Peroxid 3 | Di-tert-Butyl-3,3,5-trimethylcyclohexyliden-diperoxid, 40% Peroxid, Pulver mit Kreide, 4.23% Aktivsauerstoffgehalt, Halbwertszeittemperatur 1h = 117 °C, t90 = 145 °C (Rheometer t90 ungefähr 12 min) |
| Antioxidans | Bis[3,3-bis-(4'-hydroxy-3'-tert-butylphenyl)butansäure]-glycol ester, Molekulargewicht 794 g/mol, Schmelzpunkt 167-171 °C |
| Stärke 1 | native Kartoffelstärke, Gelierungstemperatur 55 °C |
| Stärke 2 | phosphatierte Hydroxypropyl-modifizierte Stärke auf Basis von Kartoffelstärke, Gelierungstemperatur 140 °C |
| Stärke 3 | phosphatierte Hydroxypropyl-modifizierte Stärke auf Basis von Kartoffelstärke, Gelierungstemperatur 65 °C |
| Cellulose | reine weiße Cellulosepulver und -fasern, Cellulosegehalt ~ 99,5 %, Trockenverlust 5 %, Siebrückstand 32 $\mu$m Sieb ~ 5% |
| Russ | Monarch 580 |

Die erfindungsgemäßen Versuche zeigen, dass sich durch den Einsatz von Stärke oder Cellulose sowohl direkt als auch nach längerer Lagerung homogene, feine Schäume mit einer guten Expansion erhalten lassen. Dabei konnten die Ergebnisse hinsichtlich des Expansionsverhaltens nach Lagerung entscheidend verbessert werden. Die Versuche zeigen ferner, dass sich durch den Zusatz von Stärke die Haftung auch nach Lagerung erhalten lässt.

**Patentansprüche**

1.  Thermisch expandierbare Zusammensetzung, enthaltend

    a) mindestens ein peroxidisch vernetzendes Polymer,
    b) mindestens ein Peroxid,
    c) mindestens ein Polysaccharid und
    d) mindestens ein endothermes chemisches Treibmittel,

    **dadurch gekennzeichnet, dass** die thermisch expandierbare Zubereitung weniger als 1 Gew.-% von exothermen Treibmitteln enthält.

2.  Thermisch expandierbare Zusammensetzung nach Anspruch 1, **dadurch gekennzeichnet, dass** mindestens ein peroxidisch vernetzendes Polymer a) ausgewählt wird aus Styrol-Butadien-Blockcopolymeren, Styrol-Isopren-Blockcopolymeren, Ethylen-Vinylacetat-Copolymeren, funktionalisierten Ethylen-Vinylacetat-Copolymeren, funktionalisierten Ethylen-Butylacrylat-Copolymeren, Ethylen-Propylen-Dien-Copolymeren, Ethylen-Methylacrylat-Copolymeren, Ethylen-Ethylacrylat-Copolymeren, Ethylen-Butylacrylat-Copolymeren, Ethylen-(Meth)acrylsäure-Copolymeren, Ethylen-2-Ethylhexyacrylat-Colpolymeren, Ethylen-Acrylester-Copolymeren und Polyolefinen, insbesondere aus Ethylen-Vinylacteat-Copolymeren und funktionalisierten Ethylen-Vinylacetat-Copolymeren.

**3.** Thermisch expandierbare Zusammensetzung nach Anspruch 1 oder 2, **dadurch gekennzeichnet, dass** das mindestens eine Polysaccharid eine Stärke und/oder eine Cellulose, insbesondere eine Stärke ist.

**4.** Thermisch expandierbare Zusammensetzung nach einem der Ansprüche 1 bis 3, **dadurch gekennzeichnet, dass** das Treibmittel mindestens eine Carbonsäure, insbesondere mindestens eine feste, optional funktionalisierte, Polycarbonsäuren oder deren Salz enthält, insbesondere ausgewählt aus festen, organischen Hydroxy-funktionalisierten oder ungesättigten Di-, Tri-, Tetra- oder Polycarbonsäuren oder deren Salzen, vorzugsweise Citronensäure, Weinsäure, Äpfelsäure, Fumarsäure, Maleinsäure und deren Salzen, insbesondere Citronensäure und deren Salzen.

**5.** Thermisch expandierbare Zusammensetzung nach einem der Ansprüche 1 bis 4, **dadurch gekennzeichnet, dass** das Treibmittel mindestens ein Bicarbonat enthält, insbesondere Natrium- und/oder Kaliumhydrogencarbonat, bevorzugt Natriumhydrogencarbonat

**6.** Thermisch expandierbare Zusammensetzung nach einem der Ansprüche 1 bis 5, **dadurch gekennzeichnet, dass** das Treibmittel mindestens ein Harnstoffderivat der Formel (I)

$$R1\text{-}NH\text{-}C(=X)\text{-}NR2R3 \qquad (I),$$

enthält, wobei X für O oder S steht, R1, R2 und R3 unabhängig für H, substituiertes oder unsubstituiertes Alkyl, substituiertes oder unsubstituiertes Heteroalkyl, substituiertes oder unsubstituiertes Cycloalkyl, substituiertes oder unsubstituiertes Aryl oder -C(O)-R4 stehen, wobei R4 für H, substituiertes oder unsubstituiertes Alkyl steht, insbesondere wird das Harnstoffderivat ausgewählt aus: Harnstoff, N,N-Dimethylharnstoff, N,N-Diethylharnstoff, N,N'-Dimethylharnstoff, N,N'-Diethylharnstoff, 4-Chlorophenyl-N,N-dimethylharnstoff, 4,4'-Methylen-bis-(phenyldimethylharnstoff), 1,1-Dimethyl-3-(4-chlorophenyl)harnstoff, 1,1-Dimethyl-3-(3,4-dichlorophenyl)harnstoff, Isophorone bis(dimethylharnstoff), 1,1-Dimethyl-3-phenylharnstoff, 1,1-Dimethyl-3-(4-ethoxyphenyl)harnstoff, 1,1'-(4-Phenylene)-bis-(3,3-dimethylharnstoff), 1,1-Dimethyl-3-(2-hydroxyphenyl)harnstoff und 1,1-Dimethyl-3-(3-chloro-4-methylphenyl)harnstoff, insbesondere aus Harnstoff, N,N-Dimethylharnstoff, N,N-Diethylharnstoff, N,N'-Dimethylharnstoff und N,N'-Diethylharnstoff.

**7.** Formkörper, **dadurch gekennzeichnet, dass** der Formkörper eine thermisch expandierbare Zusammensetzung nach einem der Ansprüche 1 bis 6 aufweist.

**8.** Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung einer thermisch expandierbaren Zusammensetzung nach einem der Ansprüche 1 bis 6 oder einem Formkörper nach Anspruch 7.

**9.** Verfahren nach Anspruch 8 zum Abdichten und Füllen von Hohlräumen in Bauteilen, zum Verstärken oder Versteifen von Bauteilen, **dadurch gekennzeichnet, dass** ein Formkörper nach Anspruch 7 in ein Bauteil, insbesondere den Hohlraum eines Bauteils, eingebracht wird und anschließend auf eine Temperatur oberhalb von 110°C erhitzt wird, so dass die thermisch expandierbare Zusammensetzung expandiert und das Bauteil abdichtet, füllt, verstärkt oder versteift.

**10.** Verwendung eines Formkörpers nach Anspruch 7 zur akustischen Abdichtung von Hohlräumen in Bauteilen und/oder zur Abdichtung von Hohlräumen in Bauteilen gegen Wasser und/oder Feuchtigkeit oder zum Verstärken oder Versteifen von Bauteilen, insbesondere hohlen Bauteilen.

**Claims**

**1.** A thermally expandable composition, containing

    a) at least one peroxidically crosslinking polymer,

b) at least one peroxide,
c) at least one polysaccharide and
d) at least one endothermic chemical blowing agent.

2. The thermally expandable composition according to claim 1, **characterized in that** at least one peroxidically crosslinking polymer a) is selected from styrene-butadiene block copolymers, styrene-isoprene block copolymers, ethylene-vinyl acetate copolymers, functionalized ethylene-vinyl acetate copolymers, functionalized ethylene-butyl acrylate copolymers, ethylenepropylene-diene copolymers, ethylene-methyl acrylate copolymers, ethylene-ethyl acrylate copolymers, ethylene-butyl acrylate copolymers, ethylene (meth)acrylic acid copolymers, ethylene-2-ethylhexyl-acrylate copolymers, ethylene-acrylic ester copolymers and polyolefins, in particular from ethylene-vinyl acrylate copolymers and functionalized ethylene-vinyl acetate copolymers.

3. The thermally expandable composition according to claim 1 or 2, **characterized in that** the at least one polysaccharide is a starch and/or a cellulose, in particular a starch.

4. The thermally expandable composition according to one of claims 1 to 3, **characterized in that** the blowing agent contains at least one carboxylic acid, in particular at least one solid, optionally functionalized, polycarboxylic acid or the salt thereof, in particular selected from solid, organic hydroxy-functionalized or unsaturated di-, tri-, tetra- or polycarboxylic acids or the salts thereof, preferably citric acid, tartaric acid, malic acid, fumaric acid, maleic acid and the salts thereof, in particular citric acid and the salts thereof.

5. The thermally expandable composition according to one of claims 1 to 4, **characterized in that** the blowing agent contains at least one bicarbonate, in particular sodium and/or potassium hydrogen carbonate, preferably sodium bicarbonate

6. The thermally expandable composition according to one of claims 1 to 5, **characterized in that** the blowing agent contains at least one urea derivative of formula (I)

$$R1\text{-}NH\text{-}C(=X)\text{-}NR2R3 \qquad (I),$$

where X represents O or S, R1, R2 and R3 independently represent H, substituted or unsubstituted alkyl, substituted or unsubstituted heteroalkyl, substituted or unsubstituted cycloalkyl, substituted or unsubstituted aryl or -C(O)-R4, where R4 represents H, substituted or unsubstituted alkyl, in particular the urea derivative is selected from: urea, N,N-dimethylurea, N,N-diethylurea, N,N'-dimethylurea, N,N'-diethylurea, 4-chlorophenyl-N,N-dimethylurea, 4,4'-methylene-bis-(phenyldimethylurea), 1,1-dimethyl-3-(4-chlorophenyl)urea, 1,1-dimethyl-3-(3,4-dichlorophenyl)urea, isophorone bis(dimethylurea), 1,1-dimethyl-3-phenylurea, 1,1-dimethyl-3-(4-ethoxyphenyl)urea, 1,1'-(4-phenylene)-bis-(3,3-dimethylurea), 1,1-dimethyl-3-(2-hydroxyphenyl)urea and 1,1-dimethyl-3-(3-chloro-4-methylphenyl)urea, in particular from urea, N,N'-dimethylurea and N,N'-diethylurea.

7. A shaped body, **characterized in that** the shaped body comprises a thermally expandable composition according to one of claims 1 to 6.

8. A method for sealing and filling cavities in components, for strengthening or stiffening components, in particular hollow components, and for bonding movable components using a thermally expandable composition according to one of claims 1 to 6 or a shaped body according to claim 7.

9. The method according to claim 8 for sealing and filling cavities in components, for strengthening or stiffening components, **characterized in that** a shaped body according to claim 7 is introduced into a component, in particular the cavity of a component, and is subsequently heated to a temperature above 110 °C, so that the thermally expandable composition expands and the component seals, fills, strengthens or stiffens.

10. The use of a shaped body according to claim 7 for acoustically sealing cavities in components and/or for sealing cavities in components against water and/or moisture or for strengthening or stiffening components, in particular hollow components.

**Revendications**

1. Composition thermiquement expansible, contenant

   a) au moins un polymère à réticulation peroxydique,
   b) au moins un peroxyde,
   c) au moins un polysaccharide, et
   d) au moins un agent gonflant chimique endothermique.

2. Composition thermiquement expansible selon la revendication 1, **caractérisée en ce qu'**au moins un polymère à réticulation peroxydique a) est choisi parmi les copolymères séquencés styrène-butadiène, les copolymères séquencés styrène-isoprène, les copolymères éthylène-acétate de vinyle, les copolymères éthylène-acétate de vinyle fonctionnalisés, les copolymères éthylène-acrylate de butyle fonctionnalisés, les copolymères éthylène-propylène-diène, les copolymères éthylène-acrylate de méthyle, les copolymères éthylène-acrylate d'éthyle, les copolymères éthylène-acrylate de butyle, les copolymères éthylène-acide (méth)acrylique, les copolymères éthylène-2-hexyacrylate d'éthyle, les copolymères éthylène-ester acrylique et les polyoléfines, en particulier parmi les copolymères éthylène-acétate de vinyle et les copolymères éthylène-acétate de vinyle fonctionnalisés.

3. Composition thermiquement expansible selon la revendication 1 ou 2, **caractérisée en ce que** l'au moins un polysaccharide est un amidon et/ou une cellulose, en particulier un amidon.

4. Composition thermiquement expansible selon l'une des revendications 1 à 3, **caractérisée en ce que** l'agent gonflant contient au moins un acide carboxylique, en particulier au moins un acide polycarboxylique solide éventuellement fonctionnalisé ou un sel de celui-ci, en particulier choisi parmi les acides dicarboxyliques, tricarboxyliques, tétracarboxyliques ou polycarboxyliques solides, organiques, à fonctionnalisation hydroxy ou insaturés, ou leurs sels, de préférence l'acide citrique, l'acide tartrique, l'acide malique, l'acide fumarique, l'acide maléique et leurs sels, en particulier l'acide citrique et ses sels.

5. Composition thermiquement expansible selon l'une des revendications 1 à 4, **caractérisée en ce que** l'agent gonflant contient au moins un bicarbonate, en particulier l'hydrogénocarbonate de sodium et/ou de potassium, de préférence l'hydrogénocarbonate de sodium.

6. Composition thermiquement expansible selon l'une des revendications 1 à 5, **caractérisée en ce que** l'agent gonflant contient au moins un dérivé d'urée de formule (I)

   $$R1\text{-}NH\text{-}C(=X)\text{-}NR2R3 \qquad (I),$$

   où X représente O ou S, R1, R2 et R3 représentent indépendamment H, un alkyle substitué ou non substitué, un hétéroalkyle substitué ou non substitué, un cycloalkyle substitué ou non substitué, un aryle substitué ou non substitué ou - C(O)-R4, où R4 représente H, un alkyle substitué ou non substitué, en particulier le dérivé d'urée est choisi parmi : l'urée, la N,N-diméthylurée, la N,N-diéthylurée, la N,N'-diméthylurée, la N,N'-diéthylurée, la 4-chlorophényl-N,N-diméthylurée, la 4,4'-méthylène-bis-(phényldiméthylurée), la 1,1-diméthyl-3-(4-chlorophényl)urée, la 1,1-diméthyl-3-(3,4-dichlorophényl)urée, l'isophorone bis(diméthylurée), la 1,1-diméthyl-3-phénylurée, la 1,1-diméthyl-3-(4-éthoxyphényl)urée, la 1,1'-(4-phénylène)-bis-(3,3-diméthylurée), la 1,1-diméthyl-3-(2-hydroxyphényl)urée et la 1,1-diméthyl-3-(3-chloro-4-méthylphényl)urée, en particulier parmi l'urée, la N,N-diméthylurée, la N,N-diéthylurée, la N,N'-diméthylurée et la N,N'-diéthylurée.

7. Corps moulé, **caractérisé en ce que** le corps moulé présente une composition thermiquement expansible selon l'une des revendications 1 à 6.

8. Procédé permettant d'étancher et de remplir des cavités dans des pièces, de renforcer ou de rigidifier des pièces, en particulier des pièces creuses, et de coller des pièces mobiles à l'aide d'une composition thermiquement expansible selon l'une des revendications 1 à 6 ou d'un corps moulé selon la revendication 7.

9. Procédé selon la revendication 8 permettant d'étancher et de remplir des cavités dans des pièces, de renforcer ou de rigidifier des pièces,
   **caractérisé en ce qu'**un corps moulé selon la revendication 7 est introduit dans une pièce, en particulier dans la cavité d'une pièce, puis est chauffé à une température supérieure à 110 °C, de sorte que la composition thermiquement expansible s'expanse et la pièce est étanchée, remplie, renforcée ou rigidifiée.

10. Utilisation d'un corps moulé selon la revendication 7 permettant d'étancher acoustiquement des cavités dans des pièces et/ou d'étancher des cavités dans des pièces contre l'eau et/ou l'humidité ou de renforcer ou de rigidifier des pièces, en particulier des pièces creuses.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008034755 A
- WO 2007039309 A
- WO 2013017536 A
- DE 102012221192
- WO 2015140282 A